# EUROPEAN PATENT SPECIFICATION

(11) **EP 4 387 353 B1**
(45) Date of publication and mention of the grant of the patent: **28.01.2026**
(21) Application number: 21953051.6
(22) Date of filing: 09.08.2021
(51) Int. Cl.: H04L 1/08, H04W 72/04

(54) **DUPLICATION TRANSMISSION METHOD AND APPARATUS FOR SL, AND DEVICE AND STORAGE MEDIUM**
DUPLIKATIONSÜBERTRAGUNGSVERFAHREN UND -VORRICHTUNG FÜR SL SOWIE VORRICHTUNG UND SPEICHERMEDIUM
PROCÉDÉ ET APPAREIL DE TRANSMISSION DE DUPLICATION POUR SL, DISPOSITIF, ET SUPPORT DE STOCKAGE

(43) Date of publication of application: 19.06.2024
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN)
(74) Representative: Santarelli
(86) International application number: PCT/CN2021/111574
(87) International publication number: WO 2023/015413

(56) References cited:
- WO-A1-2019/061182
- WO-A1-2019/061194
- WO-A1-2020/159307
- WO-A1-2020/223531
- CN-A- 111 418 243
- CN-A- 111 435 905
- CN-A- 112 399 641
- CN-A- 113 132 037

## Description

### TECHNICAL FIELD

The present disclosure relates to a field of communications, and in particular to a duplication transmission method for a sidelink (SL) and a duplication transmission apparatus for the SL.

### BACKGROUND

IIoT (Industrial Interest of Things) and TSN (Time Sensitive Network) services impose transmission requirements of high reliability and low latency for data transmission on the SL. In the related art, data transmission methods between terminal devices on the SL are still required to be discussed.

Document WO2019061194A1 discloses systems and methods for performing carrier aggregation in wireless sidelink communications. The method comprises: obtaining configuration information related to sidelink data transmission between the first node and at least one second node; configuring a sidelink transmission scheme based on configuration information; and transmitting sidelink data to the at least one second node on a plurality of carriers according to the sidelink transmission scheme

### SUMMARY OF THE DISCLOSURE

Embodiments of the present disclosure provide a duplication transmission method for a sidelink (SL) and a duplication transmission apparatus for the SL. The technical solution is as follows.

The present invention is defined in the independent claims, and the preferable features according to the present invention are defined in the dependent claims

According to a fourth aspect of the embodiments of the present disclosure, a duplication transmission apparatus for the SL is provided. The apparatus is configured to perform the method according to the second aspect.

The technical solution provided in the embodiments of the present disclosure may include the following beneficial effects. The present disclosure provides a duplication transmission solution for a SL. A first terminal device acquires configuration information and performing a SL transmission process with a second terminal device based on the configuration information, which may improve the high reliability of the data transmission between the terminal devices on the SL to satisfy more service requirements.

### BRIEF DESCRIPTION OF THE DRAWINGS

FIG. 1 is a schematic diagram of a network architecture according to an embodiment of the present disclosure.
FIG. 2 exemplarily illustrates a schematic diagram of a correspondence relationship among various protocol layer entities of a terminal device.
FIG. 3 exemplarily illustrates a schematic view of performing a duplication transmission in PDCP (Packet Data Convergence Protocol) layers.
FIG. 4 is a flowchart of a duplication transmission method for a SL according to an embodiment of the present disclosure.
FIG. 5 is a block view of a duplication transmission apparatus for the SL according to an embodiment of the present disclosure.
FIG. 6 is a block view of a duplication transmission apparatus for SL according to an embodiment of the present disclosure.
FIG. 7 is a structural schematic view of a terminal device according to an embodiment of the present disclosure.
FIG. 8 is a structural schematic view of a network device according to an embodiment of the present disclosure.

### DETAILED DESCRIPTION

In order to make an object, a technical solution, and advantages of the present disclosure clearer, embodiments of the present disclosure will be further described in detail below in conjunction with accompanying drawings.

The network architecture and service scenarios described in the embodiments of the present disclosure are for a purpose of more clearly illustrating the technical solution of the embodiments of the present disclosure, and do not constitute a limitation of the technical solution provided in the embodiments of the present disclosure. A person of ordinary skill in the art may know that the technical solution provided in the embodiments of the present disclosure are equally applicable to similar technical problems with the evolution of the network architecture and emergence of new service scenarios.

The technical solution of the embodiments of the present disclosure may be applied to or performed in various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, a LTE-based access to unlicensed spectrum (LTE-U) system, a NR-based access to the unlicensed spectrum (NR-U) system, a Non-Terrestrial network (NTN) system, a Universal Mobile Telecommunication System (UMTS), a Wireless Local Area Network (WLAN), Wireless Fidelity (WiFi), a 5th-Generation (5G) communication systems, or other communication systems.

Generally, a connection number supported by a traditional communication system is limited and is easy to be achieved. However, with the development of communication technologies, a mobile communication system will not only support a traditional communication, but also support, e.g., a Device to Device (D2D) communication, a Machine to Machine (M2M) communication, a Machine Type Communication (MTC), a Vehicle to Vehicle (V2V) communication, or a Vehicle to everything (V2X) communication, etc. The embodiments of the present disclosure may also be applied to or performed in these communication systems mentioned above.

The communication system in the embodiments of the present disclosure may be applied to a Carrier Aggregation (CA) scenario, or a Dual Connectivity (DC) scenario, or a Standalone (SA) network deployment scenario.

The communication system in the embodiments of the present disclosure may be applied to the unlicensed spectrum. The unlicensed spectrum may also be considered as a shared spectrum. Alternatively, the communication system in the embodiments of the present disclosure may also be applied to a licensed spectrum, and the licensed spectrum may also be considered as an unshared spectrum.

The embodiments of the present disclosure may be applied to the NTN system or be applied to a Terrestrial Network (TN) system.

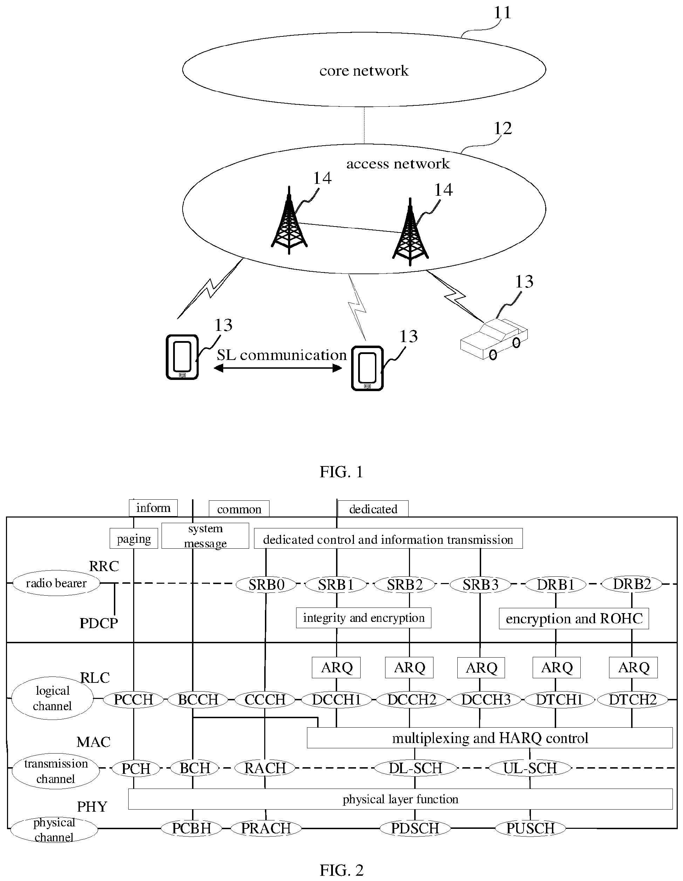

As shown in FIG. 1, FIG. 1 illustrates a schematic diagram of a network architecture according to an embodiment of the present disclosure. The network architecture may include a core network 11, an access network 12, and a terminal device 13.

The core network 11 includes a number of core network devices. The functions of the core network devices are to provide user connections and management for users, to complete bearing for services, and to serve as an interface provided by a bearer network to an external network. For example, the core network of a 5G NR system may include an AMF (Access and Mobility Management Function) entity, a UPF (User Plane Function) entity, and a SMF (Session Management Function) entity, and the like.

The access network 12 includes a number of access network devices 14. The access network in the 5G NR system may be referred to as a NG-RAN (New Generation-Radio Access Network). The access network device 14 is an apparatus deployed in the access network 12 and configured to provide a wireless communication function for the terminal device 13. The access network device 14 may include various forms of macro base stations, micro base stations, relay stations, access points, and the like. In systems employing different wireless access technologies, the names of devices having the function of the access network device may be different. For example, in the 5G NR system, the name is a gNodeB or a gNB. The name or term of "access network device" may vary as the communication technology evolves. For convenience of description, in the embodiments of the present disclosure, the above-described apparatus providing the wireless communication function for the terminal device 13 are collectively referred to as an access network device.

The number of terminal devices 13 is usually multiple. A cell managed by each of the access network devices 14 may be distributed with one or more terminal devices 13. The terminal devices 13 may include various handheld devices, in-vehicle devices, wearable devices, computing devices, or other processing devices connected to a wireless modem which have wireless communication functions, and various forms of user equipment, mobile stations (MS), and the like. For ease of description, the devices mentioned above are collectively referred to as terminal devices. The access network devices 14 and the core network devices may communicate with each other via an air technology, such as a NG interface in the 5G NR system. The access network devices 14 and the terminal devices 13 may communicate with each other via the air technology, such as a Uu interface.

The terminal device 13 and another terminal device 13 (e.g., an in-vehicle device and other devices (e.g., other in-vehicle devices, a cell phone, a RSU (Road Side Unit), etc.)) may communicate with each other through a direct communication interface (e.g., a PC5 interface (ProSe Communication 5)). Accordingly, a communication link established based on the direct communication interface may be referred to as a direct communication link or the SL. A SL transmission is namely that a transmission of communication data is directly performed between the terminal devices through the SL. Different from the communication data being transmitted or received through the access network device in a traditional cellular system, the SL transmission has a character such as a short latency, a small overhead, etc., which is appliable for a communication between two terminal devices having approximate geographic locations (e.g., the in-vehicle device and other peripheral devices having approximate geographic locations with the in-vehicle device).

The "5G NR system" in the embodiments of the present disclosure may also be referred to as a 5G system or an NR system, and a person skilled in the art may understand the meaning thereof. The technical solution described in the embodiments of the present disclosure may be applicable to the LTE system, the 5G NR system, or a subsequent evolution system of the 5G NR system, or may also be appliable to other communication systems such as an NB-IoT (Narrow Band Internet of Things) system, which is not limited in the present disclosure.

In the embodiments of the present disclosure, a network device may provide a service for the cell. The terminal device communicates with the network device via a transmission resource (e.g., a frequency domain resource, or, in other words, a spectrum resource) on a carrier used by the cell. The cell may be a cell corresponding to a network device (e.g., a base station). The cell may belong to a macro base station, or may belong to a base station corresponding to a small cell. The small cell herein may include a Metro cell, a Micro cell, a Pico cell, a Femto cell, etc. These small cells may have characters of small coverage areas and a low transmit powers, which are appliable for providing a high-speed data transmission service.

The User Equipment (UE) in the embodiments of the present disclosure the terminal device express or represent the same meaning, which are exchangeable to each other. The network device, the access network device, and the base station express or represent the same meaning, which are exchangeable to each other.

Before introducing the technical solution of the present disclosure, some background technical knowledge involved in the present disclosure is firstly introduced and explained. Relevant technologies in the following serve as alternative solutions and may be arbitrarily combined with the technical solution of the embodiments of the present disclosure, which all fall within the scope of the embodiments of the present disclosure. The embodiments of the present disclosure include at least a part of the following content.

First, the PDCP (Packet Data Convergence Protocol) layers are described.

A NR protocol stack may be divided into a control-plane portion and a user-plane portion. A control-plane protocol stack is an air interface system and an Internet Protocol (IP) system from a bottom layer to a top layer in sequence. The air interface system includes a physical (PHY) layer, a Medium Access Control (MAC) layer, a Radio Link Control (RLC) layer, and a PDCH layer from a bottom to a top in sequence. The IP system includes a Radio Resource Control (RRC) layer.

It can be seen that the PDCP layer is a demarcation layer between wireless layers and high layers. The function of the PDCP layer include IP data packet and header compression, user data encryption, control data encryption, protection of data integrity, and retransmission sequencing/duplication transmission.

A relationship between a RRC, a RB (Radio Bearer), and a RLC entity will be described below in conjunction with FIG. 2.

As shown in FIG. 2, FIG. 2 exemplarily illustrates a correspondence relationship among various protocol layer entities of the terminal device.

The PDCP layer includes a plurality of PDCP entities. Each of the PDCP entities may correspondingly process one RB. A transmitting end establishes corresponding relationships between the PDCP entities and RBs based on a request of an upper layer.

The RRC is a protocol entity which is configured to manage the RB. The transmitting end and a receiving end may complete an establishment, a modification, a release of the RB through a RRC signaling. The RB is a channel of the Uu interface connecting the transmitting end and the receiving end. In a protocol layer, such as the PHY layer, the MAC layer, the RLC layer, and the PDCP layer, etc., any data transmitted through the Uu interface passes through the RB.

The RB includes two types, i.e., a DRB (Data Radio Bearer) and a SRB (Signaling Radio Bearer).

The SRB is configured to carry control message data and includes SRB0, SRB1, SRB2, and SRB3.

The SRB0 is configured to transmit a RRC signaling. SRB0 employs a Logical Channel (LCH) Common Control Channel (CCCH) to transmit the RRC signaling. The SRB0 has been assigned before the terminal device is connected to a network.

The SRB1 is configured to transmit the RRC signaling or a NAS (Non Access Stratum) signaling through the LCH Dedicated Control Channel (DCCH).

The SRB2 is configured to transmit the NAS signaling. The SRB2 employs the LCH DCCH for transmission. A priority of the SRB2 is lower than a priority of the SRB1.

The SRB3 is configured to initiate connection establishment in a Dual Connectivity (DC) state and employs the LCH DCCH for transmission.

The DRB is configured to carry user-plane data, such as an IP packet. Up to 8 DRBs may be established simultaneously between the terminal device and the network device.

Different RBs are caused to correspond to different LCHs for the transmission. In some embodiments, each of the RBs corresponds to one RLC entity and one LCH through protocol pre-configuration.

A duplication transmission function supported in R15/R16 is described next.

In order to support the transmission requirements of URLLC (Ultra Reliability and Low Latency Communication) for the IIoT and TSN services and to ensure the low latency and reliability of a data transmission process, the R15/R16 implements the duplication transmission function, also referred to as Packet Duplication, in an IIoT project. The data transmission function is realized through the PDCP layers.

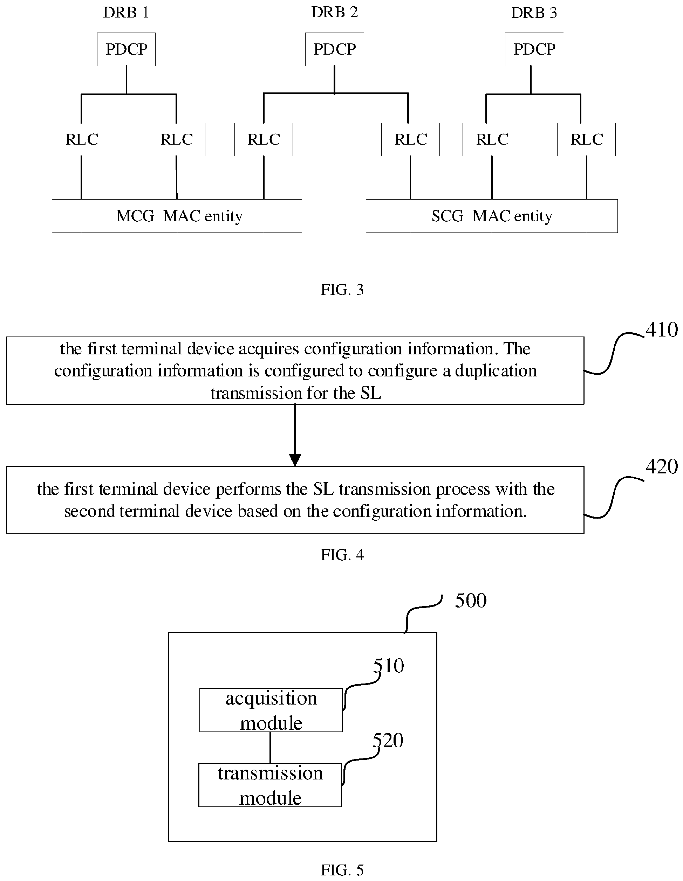

As shown in FIG. 3, FIG. 3 illustrates of performing a duplication transmission in the PDCP layers.

The transmitting end maps a same PDU (Packet Data Unit) into n RLC entities (n=1, 2, 3, 4, etc.) and maps the n RLC entities to different carriers through MAC layers. Since a probability of multiple transmission channels having errors simultaneously is small in a case of transmitting in different carriers, a possibility of an error occurring in the data transmission process may be reduced through transmitting the same data by the different carriers, such that a duplication transmission process may have the reliability. In addition, a receiving-end device may simultaneously receive data transmitted by the different carriers, which may reduce a latency of the data transmission process.

In R15, the transmitting end is only supported to employ two RLC entities to perform the duplication transmission process, i.e., a 2-leg CA scenario and a 2-leg DC scenario.

In a CA scenario, a process of performing the data duplication transmission by employing two RLC entities is as shown in the DRB 1 and DRB 3 in FIG. 3. In the duplication transmission process, a PDCP PDU is transmitted to two RLC entities, respectively, such that ultimately the PDCP PDU for duplication is transmitted in two different aggregation carriers. In this way, the reliability of the data transmission may be improved through a frequency diversity gain.

In a DC scenario, the process of performing the data duplication transmission by employing two RLC entities is as shown in the DRB 2 in FIG. 3. When the terminal device is in a DC status, the terminal device may be connected to two cells at the same time. During performing the duplication transmission process, the terminal device employs two RLC entities to transmit the same PDU and maps the two RLC entities to different MAC entities for transmission.

In R16, in order to better support the IIOT service, a duplication transmission of more than 2-Leg is introduced. That is, the terminal device supports a duplication transmission performed in 4-Leg CA and CA+DC.

In addition to the duplication transmission, a spilt transmission is also supported between the terminal device and the network device.

It is specified in R15 that in a case of the duplication transmission is in a de-activated status, when conditions of the split transmission are satisfied, a PDCP entity may employ both a primary leg and a secondary leg to transmit the PDCP PDU at the same time; when the conditions of the split transmission are not satisfied, the PDCP entity only employ the primary leg to transmit the PDCP PDU. The transmitting end device may determine whether to perform the spilt transmission based on a relationship between a data amount of a to-be-transmitted PDU on configured two RLC entities or the RLC and a threshold.

In R16, since up to four RLC entities are allowed to be used for the duplication transmission, the Secondary Leg is required to be configured during performing the duplication transmission, so as to determine the transmitting end employs which Secondary Leg(s) to perform the split transmission.

In the related, only a data duplication transmission between the terminal device and the network device is supported. In order to achieve the requirement of the URLLC, a duplication transmission method on the SL is required to be discussed.

In the following, the technical solution of the present disclosure will be described and illustrated through some exemplary embodiments.

As shown in FIG. 4, FIG. 4 is a flowchart of the duplication transmission method according to an embodiment of the present disclosure. The method may be applied to or performed in the network architecture shown in FIG. 1. An entity of the method is a first terminal device. The method may include at least one of the following operations 410-420.

In an operation 410, the first terminal device acquires configuration information. The configuration information is configured to configure a duplication transmission for the SL.

In some embodiments, the configuration information is configured to configure a duplication transmission for a direct communication interface. For example, the direct communication interface is the PC5 interface.

In some embodiments, the configuration information conforms to at least one case of the configuration information being targeted at the first terminal device and/or the second terminal device; the configuration information being targeted at a transmitting resource pool used by the first terminal device and/or the second terminal device, and the configuration information corresponding to the transmitting resource pool being common for a plurality of terminal devices, or the configuration information corresponding to the transmitting resource pool being dedicated for the first terminal device and/or the second terminal device; the configuration information being targeted at a receiving resource pool used by the first terminal device and/or the second terminal device, the configuration information corresponding to the receiving resource pool being common for the plurality of terminal devices, or the configuration information corresponding to the transmitting resource pool being dedicated for the first terminal device and/or the second terminal device; and the configuration information being targeted at a DRB and/or a SRB.

The first terminal device is a device having a transceiving function, and the second terminal device is a device having the transceiving function and capable of performing a SL transmission process with the first terminal device. The first terminal device and the second terminal device are two different terminal devices.

In some embodiments, the second terminal device is a particular terminal device, e.g., the second terminal device is a particular terminal device which performs the SL transmission process with the first terminal device.

In some embodiments, the second terminal device refers to at least one terminal device in general sense. For example, the second terminal device is all terminal devices capable of performing the SL transmission process with the first terminal device.

In the claimed invention, the transmitting resource pool includes resource information available to transmit data in the SL transmission process, and the resource information includes but is not limited to information such as, a power, a frequency, a time slot, a space resource, etc. In some embodiments, in an area losing a network coverage, the first terminal device and/or the second terminal device employs configuration information of an available resource in the transmitting resource pool to transmit the data. In some embodiments, the first terminal device and/or the second terminal device may select a resource configured to transmit the data from the transmitting resource pool in a manner of listening or a random selection. In some embodiments, the configuration information corresponding to the transmitting resource pool is common for the plurality of terminal devices, and the plurality of terminal devices may employ the same transmitting resource pool to transmit the data. In some embodiments, the configuration information corresponding to the transmitting resource pool is targeted at a particular terminal device or some particular terminal devices, and only the particular terminal device(s) is/are allowed to employ the configuration information corresponding to the transmitting resource pool to transmit the data. In an embodiment, the transmitting resource pool is pre-configured.

In claimed invention, the receiving resource pool includes resource information available to receive the data in the SL transmission process, and the resource information includes but is not limited to the information such as, the power, the frequency, the time slot, the space resource, etc. In some embodiments, in the area losing the network coverage, the first terminal device and/or the second terminal device employs configuration information of an available resource in the receiving resource pool to receive the data. In some embodiments, the first terminal device and/or the second terminal device may select a resource configured to receive the data from the receiving resource pool in the manner of listening or the random selection. In some embodiments, the configuration information corresponding to the receiving resource pool is common for the plurality of terminal devices, and the plurality of terminal devices may employ the same receiving resource pool to receive the data. In some embodiments, the configuration information corresponding to the receiving resource pool is targeted at a particular terminal device or some particular terminal devices, and only the particular terminal device(s) is/are allowed to employ the configuration information corresponding to the receiving resource pool to receive the data. In an embodiment, the receiving resource pool is pre-configured.

In some embodiments, the configuration information is targeted at the DRB alone. In some embodiments, the configuration information is targeted at the SRB alone. In some embodiments, the configuration information is targeted at both the DRB and the SRB, i.e., common for both the DRB and the SRB. The first terminal device performs a data transmission process targeted at or for the DRB and/or the SRB based on the configuration information.

In other embodiments, the configuration information is targeted at a particular DRB. In some embodiments, the configuration information is targeted at a particular SRB. The first terminal device performs a data transmission process targeted at or for the particular DRB and/or the particular SRB based on the configuration information.

In some embodiments, the configuration information includes at least one of configuration information corresponding to a duplication transmission employing two RLC entities and configuration information corresponding to a duplication transmission employing greater than two RLC entities. For example, in a case of the configuration information including the configuration information corresponding to the duplication transmission employing two RLC entities, the PDCP layer of the first terminal device generates a duplication transmission body and a duplication transmission duplicate, and transmits a generated duplication transmission body and a generated duplication transmission duplicate through two different RLC entities. For example, in the case of the configuration information including the configuration information corresponding to the duplication transmission employing four RLC entities, the first terminal device determines whether to employ all of the four RLC entities to perform the duplication transmission based on the configuration information. In an embodiment, in the case of the configuration information including the configuration information corresponding to the duplication transmission employing four RLC entities, the first terminal device determines which of the four RLC entities to perform the duplication transmission based on the configuration information. With respect to contents of the number of RLC entities determined in the duplication transmission, the reference may be made to relevant introduction in the background technology, which is not repeated herein.

In some embodiments, the duplication transmission employing two RLC entities (i.e., a 2-leg PDCP duplication) is configured in a pre-configured manner. That is, the configuration information corresponding to the duplication transmission employing two RLC entities is pre-configured.

In some embodiments, the configuration information includes at least one of at least one RLC entity identity or LCH identity corresponding to a RB, primary path information, indication information of whether the duplication transmission is activated, secondary path information, an activated RLC entity identity, an activated RLC entity group identity, and an allowed carrier.

The at least one RLC entity identity or LCH identifier corresponding to the RB is configured to indicate a RLC entity identity or LCH identity information configured to carry the data. In some embodiments, a corresponding RB is one of the SRB or the DRB. In some embodiments, corresponding RBs are the SRB and DRB. The indication information of whether the duplication transmission is activated is configured to indicate the first terminal device and/or the second terminal device to determine whether to perform a duplication transmission. An activated RLC entity identity is configured to indicate information of an RLC entity which is in an active status and may be directly configured for a SL duplication transmission. The activated RLC entity group identify is a set of some activated RLC entities, or, the activated RLC entity group identify is a set consisting of at least one activated RLC entity. The primary path information and the secondary path information are configured to indicate paths for the split transmission. The allowed carrier is configured to indicate carrier information available in a process of the terminal device performing the SL duplication transmission or in a case of the SL duplication transmission being de-activated.

In some embodiments, the configuration information includes at least one of an indication of allowing the terminal device to activate or de-activate the SL duplication transmission and an enable identify of the duplication transmission. The enable identify of the duplication transmission is configured to indicate whether to perform the duplication transmission. For example, the enable identify of the duplication transmission is configured to indicate whether the first terminal device and/or the second terminal device performs the duplication transmission. For example, in a case where the first terminal device determines to be allowed to activate the SL duplication transmission based on the configuration information, the first terminal device may perform the SL duplication transmission or a duplication transmission determination based on the configuration information. Alternatively, the first terminal device determines the information of the duplication transmission (e.g., employs which RLC entities to perform the duplication transmission).

In some embodiments, the configuration information includes at least one of an identity of the first terminal device and/or the second terminal device and an RB identity. In an embodiment, when the configuration information is targeted at the duplication transmission between the first terminal device and the second terminal device, an identity of a terminal device and/or the RB identify configured to correspond to the duplication transmission may be indicated in the configuration information, i.e., a mapping relationship between the configuration information and the terminal device. The network device configuring and transmitting the configuration information being taken as an example, in a possible case, the configuration information may include the identity of the first terminal device and/or the second terminal device to indicate that the configuration information is targeted at the SL duplication transmission between the first terminal device and the second terminal device. In another possible case, the configuration information may include the identity of the first terminal device to indicate that the configuration information is targeted at a SL duplication transmission between the first terminal device and other terminal devices (e.g., the second terminal device). In a further possible case, the network device transmits the configuration information to the first terminal device and the configuration information includes the RB identity to indicate that the configuration information is of a particular RB (i.e., a RB indicated by the RB identity). In a yet possible case, the network device transmits the configuration information to the first terminal device and the configuration information includes the RB identity or includes the RB identity and the identity of the first terminal device or includes the RB identity and the identity of the second terminal device to indicate that the configuration information is targeted at a particular RB (i.e., a RB indicated by the RB identity) of the first terminal device.

In some embodiments, the configuration information may be further targeted at a unidirectional SL duplication transmission from the first terminal device to the second terminal device, or a unidirectional SL duplication transmission from the second terminal device to the first terminal device, or a bi-directional SL duplication transmission between the first terminal device and the second terminal device. In an embodiment, the configuration information includes direction indication information, which is configured to indicate the configuration information to configure targeted at the unidirectional SL duplication transmission from the first terminal device to the second terminal device, or the unidirectional SL duplication transmission from the second terminal device to the first terminal device, or the bi-directional SL duplication transmission between the first terminal device and the second terminal device.

In some embodiments, the configuration information includes at least one of an enable identity of a split transmission and a threshold of the split transmission. The enable identity of the split transmission is configured to indicate whether the first terminal device and/or the second terminal device is able to perform the split transmission. The threshold of the split transmission is configured to indicate conditions of the first terminal device and/or the second terminal device performing the split transmission. In an embodiment, the threshold of the split transmission includes a channel condition, a to-be-transmitted data amount on the RLC entities of the terminal device, and the like.

In an operation 420, the first terminal device performs the SL transmission process with the second terminal device based on the configuration information.

In some embodiments, the first terminal device performs the transmission with the second terminal device through the PC5 interface based on the configuration information. The SL duplication transmission (or a duplication transmission of the PC5 interface) of the terminal devices is performed at the PDCP layer. The SL transmission process refers to directly performing the data transmission between the terminal devices through the SL, without a network device to relaying the data.

For example, the data is transmitted from the first terminal device to the second terminal device, the first terminal device performs the duplication transmission for the data based on acquired configuration information.

In some embodiments, the first terminal device performing the SL transmission process with the second terminal device based on the configuration information includes at least one of manners 1-4 in the following.
1. determining whether to perform the duplication for the SL based on the configuration information.
2. determining whether to perform the duplication transmission for the DRB and/or the SRB based on the configuration information.
3. determining at least one of the DRB for which the duplication transmission is performed, the SRB for which the duplication transmission is performed, an RLC entity of performing the duplication transmission, an activated RLC entity, a RLC entity group of performing the duplication transmission, an activated RLC entity group, and the number of duplicates for which the duplication transmission is performed, based on the configuration information.
4. determining RLC entities to which the data and a data duplicate in the duplication transmission are transmitted, respectively, based on the configuration information.

In some embodiments, the PDCP of the first terminal device determines at least one of the above. For example, the PDCP of the first terminal device determines at least one of the DRB for which the duplication transmission is performed, the SRB for which the duplication transmission is performed, and the RLC entity of performing the duplication transmission. In an embodiment, for a RB for which the duplication transmission is performed, the PDCP of the first terminal device transmits the data and the data duplicate to a determined RLC entity of transmitting duplication data.

In some embodiments, each activated RLC entity transmits a duplicate of one duplication transmission of the data.

In some embodiments, the first terminal device acquires the configuration information. The configuration information includes indication information of the duplication transmission being activated, a RLC entity identify corresponding to the SRB, an activated RLC entity group identify, and a duplication transmission identify employing two RLC entities. The first terminal device determines to perform the duplication transmission in the SL based on the indication information of the duplication transmission being activated, and determines the RLC entities configured to carry the duplication transmission body and the duplication transmission duplicate based on the RLC entity identify corresponding to the SRB. The activated RLC entity group identify indicates that a RLC entity 2, a RLC entity 3, a RLC entity 9, and a RLC entity 14 are in an activated status. The first terminal device selects the RLC entity 2 and the RLC entity 3 for the SL duplication transmission from the activated RLC entity group identify based on the duplication transmission identify employing two RLC entities in the configuration information. The first terminal device employs the RLC entity 2 and the RLC entity 3 to perform the SL duplication transmission with the second terminal device based on the above information.

It should be noted that the duplication transmission is applicable to a unicast transmission or a DRB corresponding to the unicast, but does not exclude to be applied to multicast or broadcast. In addition, the SL duplication transmission is applicable to the CA scenario, i.e., a CA duplication transmission.

In some embodiments, the first terminal device determines whether to perform a split transmission for the SL in a case of determining not to perform the duplication transmission for the SL or the duplication transmission for the SL being de-activated or not configured. The first terminal device performs a data split transmission through a primary path and a secondary path in a case of determining to perform the split transmission for the SL. For example, the PDCP of the first terminal device performs the data split transmission through the primary path and the secondary path in response to further determining to perform the spilt transmission for the SL in the case of determining not to perform the duplication transmission for the SL or the duplication transmission for the SL being de-activated or not configured. In an embodiment, the first terminal device may determine whether to perform the spilt transmission for the SL by itself, or may also determine whether to perform the spilt transmission for the SL based on an indication of the network device.

In some embodiments, the first terminal device performs a single RLC entity transmission in the case of determining not to perform the duplication transmission for the SL or the duplication transmission for the SL being de-activated or not configured. In an embodiment, the first terminal device may determine whether to perform the single RLC entity transmission by itself, or may also determine whether to perform the single RLC entity transmission based on the indication of the network device.

In some embodiments, the first terminal device transmits assistance information to the network device. The assistance information is configured for the network device to determine at least one of a configured duplication transmission of the SL, an activated and/or de-activated duplication transmission of the SL, and an activated RLC entity and/or a de-activated RLC entity. For example, the assistance information includes but is not limited to at least one of channel quality, a code error rate, Quality of Service (QoS) related information, a reliability requirement, and the like. For example, the assistance information includes but is not limited to at least one of a duplication transmission configuration of the SL, a duplication transmission activation indication and/or a duplication transmission de-activation indication of the SL, and the activated RLC entity and/or the de-activated RLC entity. The assistance information serves as reference information used or configured by the network device. Alternatively, the network device directly uses or configures the assistance information.

In some embodiments, the first terminal device may further perform at least one of the following operations 1-5.
1. acquiring a first activating signaling. The first activating signaling is configured to indicate to activate the duplication transmission for the SL.
2. acquiring a first de-activating signaling. The first de-activating signaling is configured to indicate to de-activate the duplication transmission for the SL.
3. acquiring a second activating signaling. The second activating signaling is configured to indicate a RLC entity used for activating the duplication transmission for the SL.
4. acquiring a second de-activating signaling. The second de-activating signaling is configured to indicate a RLC entity used for de-activating the duplication transmission for the SL.
5. acquiring a third activating signaling. The third activating signaling is configured to indicate a RLC entity used for activating or employing the split transmission, or indicate to activate or employ the split transmission.

In some embodiments, at least one of the first activating signaling, the first de-activating signaling, the second activating signaling, the second de-activating signaling, and the third activation signaling described above is configured or pre-configured by the network device.

In some embodiments, at least one of the first activating signaling, the first de-activating signaling, the second activating signaling, the second de-activating signaling, and the third activation signaling described above is configured by a target terminal device. The target terminal device is at least one of the first terminal device, the second terminal device, and a third terminal device other than the first terminal device and the second terminal device. For example, the third terminal device may be a terminal device having a control function.

The present disclosure provides a solution of the duplication transmission solution for the SL. The first terminal device acquires the configuration information and performs a SL duplication data transmission process with a second terminal device based on the configuration information, which may improve the reliability of the data transmission between the terminal devices in the SL to satisfy more service requirements.

In some embodiments, the configuration information is configured or pre-configured by the network device. For example, for the SL duplication transmission between the terminal devices, corresponding configuration information is indicated to the terminal devices in a manner of the network device configuring or pre-configuring. The first terminal device and the second terminal device perform the SL duplication transmission by employing the configuration information configured or pre-configured by the network device.

In some embodiments, the configuration information is configured by the network device. That is, the network device generates the configuration information and transmits the configuration information to the terminal device. For example, the network device transmits the configuration information to the first terminal device and/or the second terminal device.

In some embodiments, the configuration information is pre-configured. The pre-configuring may be implemented through pre-storing corresponding codes and tables in a device (e.g., including the terminal device and the network device) or in other manners indicating relevant information. A specific implementation manner is not limited in the present disclosure. For example, pre-configuring contents may be contents defined in a protocol. In some embodiments of the present disclosure, the term "protocol" may refer to a standard protocol in the field of communications, which may include, e.g., a LTE protocol, a NR protocol, and a relevant protocol to be applied in a future communication system, which is not limited in the present disclosure.

In addition, introduction and illustration related to the configuration information may refer to the above embodiments, which are mot repeated herein.

In some embodiments, the network device transmits the configuration information to the first terminal device and the second end device, respectively. In this manner, the configuration information is transmitted by the network device to the two terminal devices performing the SL transmission process. For example, the network device transmits the configuration information to the first terminal device and the second terminal device, respectively, through the Uu interface. In an embodiment, the network device may transmit the configuration information to the terminal device through a RRC message (e.g., SL-configDedicated or SL-PDCP-config).

In some embodiments, the network device transmits the configuration information to the first terminal device, and the first terminal device transmits the configuration information to the second terminal device. Alternatively, the network device transmits the configuration information to the second terminal device, and the second terminal device transmits the configuration information to the first terminal device. For example, the first terminal device transmits the configuration information to the second terminal device through the PC5 interface. Alternatively, the second terminal device transmits the configuration information to the first terminal device through the PC5 interface. In addition, for this case, the terminal device receiving the configuration information may enable the SL duplication transmission (for example, the network device transmits the configuration information to the first terminal device, which indicates the first terminal device enables the SL duplication transmission. Alternatively, the network device transmits the configuration information to the second terminal device, which indicates the second terminal device enables the SL duplication transmission.), or both the first terminal device and the second terminal device enable the SL duplication transmission. Further, for this case, the terminal device indicated in the configuration information enables the SL duplication transmission (for example, the network device transmits the configuration information to the first terminal device and the configuration information carries the identity of the second terminal device, which indicates the second terminal device enables the SL duplication transmission.).

In some embodiments, the network device transmits the configuration information to the first terminal device and the first terminal device does not transmit the configuration information to the second terminal device. Alternatively, the network device transmits the configuration information to the second terminal device and the second terminal device does not transmit the configuration information to the first terminal device. For this case, only the terminal device receiving the configuration information enables the SL duplication transmission (e.g., the network device transmits the configuration information to the first terminal device, which indicates the first terminal device enables the SL duplication transmission. Alternatively, the network device transmits the configuration information to the second terminal device, which indicates the second terminal device enables the SL duplication transmission).

In some embodiments, the network device transmits the configuration information to a transmitting end of the first terminal device and the second terminal device. The transmitting end indicates the terminal device serving as a transmitting side when the first terminal device and the second terminal device are performing the SL transmission process. For example, when the first terminal device transmits the data to the second terminal device, the first terminal device is the transmitting end. When the second terminal device transmits data to the first terminal device, the second terminal device is the transmitting end. The transmitting end may also be referred to as the transmitting terminal, a transmitting end UE, a terminal corresponding to a transmitting entity, and the like, which is not limited in the present disclosure.

In some embodiments, the configuration information configured or pre-configured by the network device includes all configuration parameters required for performing the SL transmission process. For example, the configuration information configured or pre-configured by the network device includes all configuration parameters required to perform a duplication transmission of the SL. The terminal device performs the duplication transmission of the SL completely based on the configuration information of the network device.

By the network device configuring the configuration parameters of the SL duplication transmission between the terminal devices, the terminal devices performing the SL duplication transmission based on parameters configured by the network device, the SL duplication transmission may be controlled by a network as much as possible.

In some embodiments, the signaling described in the above embodiments is configured or pre-configured by the network device. The signaling includes at least one of the first activating signaling, the first de-activating signaling, the second activating signaling, the second de-activation signaling, and the third activating signaling.

In some embodiments, the network device transmits the signaling to the first terminal device and the second end device, respectively.

In some embodiments, the network device transmits the signaling to the first terminal device and the first terminal device transmits the signaling to the second terminal device. Alternatively, the network device transmits the signaling to the second terminal device and the second terminal device transmits the signaling to the first terminal device.

In some embodiments, the network device transmits the signaling to the first terminal device and the first terminal device does not transmit the signaling to the second terminal device. Alternatively, the network device transmits the signaling to the second terminal device and the second terminal device does not transmit the signaling to the first terminal device.

In some embodiments, the network device transmits the signaling to the transmitting end of the first terminal device and the second terminal device.

In a case of the signaling being configured or pre-configured by the network device, a transmitting manner of the signaling is similar to a transmitting manner of the configuration information, which may refer to the introduction and illustration related to a transmitting manner of the configuration information in the above description for details and is not repeated herein.

In some embodiments, the configuration information configured or pre-configured by the network device includes a part of the configuration parameters required to perform the SL transmission process, and the first terminal device determines a remaining part of the configuration parameters required to perform the SL transmission process by itself. For example, the configuration information configured or pre-configured by the network device includes a part of the configuration parameters required to perform the SL duplication transmission, and the first terminal device determines a remaining part of the configuration parameters required to perform the SL duplication transmission by itself.

An introduction and illustration related to the configuration information may refer to the above embodiments, which are not repeated herein.

In some embodiments, the first terminal device receives first indication information from the network device. The first indication information is configured to indicate whether the terminal device is allowed to determine configuration parameters of the duplication transmission for the SL by itself. In an embodiment, the first indication information may be carried in the configuration information, or may also be transmitted independent of the configuration information. When the first terminal determines that the network device allows it to determine the configuration parameters of the duplication transmission for the SL by itself based on the first indication information, the first terminal device may determine a part or all of the configuration parameters of the duplication transmission for the SL by itself, or the first terminal device may enable one of multiple sets of configuration parameters configured or pre-configured by the network. When the first terminal determines that the network device does not allow it to determine the configuration parameters of the duplication transmission for the SL by itself based on the first indication information, the first terminal device may determine the configuration parameters of the duplication transmission for the SL based on the configuration information configured or pre-configured by the network device, or the first terminal device may enable default configuration parameters of the multiple sets of configuration parameters configured or pre-configured by the network.

For example, for the duplication transmissions employing greater than two RLC entities, the network device configures or pre-configures whether to perform the duplication transmission, and the terminal device (such as the transmitting end) may determine to employ which RLC entity by itself.

In some embodiments, the first terminal device receives second indication information from the network device. The second indication information is configured to indicate whether the terminal device is allowed to determine to activate or de-activate the duplication transmission for the SL by itself. In an embodiment, the second indication information may be carried in the configuration information, or may also be transmitted independent of the configuration information. When the first terminal determines that the network device allows it to determine to activate or de-activate the duplication transmission for the SL by itself based on the second indication information, the first terminal device may activate or de-activate the duplication transmission for the SL by itself based on an actual transmission requirement. When the first terminal determines that the network device does not allow it to determine to activate or de-activate the duplication transmission for the SL by itself based on the second indication information, the first terminal device may determine to activate or de-activate the duplication transmission for the SL based on an activating signaling or a de-activating signaling of the network device.

In some embodiments, in a case of the network device indicating the terminal device to activate or de-activate the duplication transmission for the SL through the activating signaling or the de-activating signaling, the first terminal device may receive the first activating signaling from the network device. The first activating signaling is configured to indicate to activate the duplication transmission for the SL. The first terminal device determines to activate the duplication transmission for the SL based on the first activating signaling. Alternatively, the first terminal device may receive the first de-activating signaling from the network device. The first de-activating signaling is configured to indicate to deactivate the duplication transmission for the SL. The first terminal device determines to deactivate the duplication transmission for the SL based on the first de-activating signaling.

In some embodiments, the first terminal device receives third indication information from the network device. The third indication information is configured to indicate whether the terminal device is allowed to determine whether to activate or de-activate a RLC entity of the duplication transmission for the SL by itself. In an embodiment, the third indication information may be carried in the configuration information, or may also be transmitted independent of the configuration information. When the first terminal determines that the network device allows it to determine to activate or de-activate the RLC entity of the duplication transmission for the SL by itself based on the third indication information, the first terminal device may activate or de-activate the RLC entity of the duplication transmission for the SL by itself based on the actual transmission requirement. When the first terminal determines that the network device does not allow it to determine to activate or de-activate the RLC entity of the duplication transmission for the SL by itself based on the third indication information, the first terminal device may determine to activate or de-activate the RLC entity of the duplication transmission for the SL based on the activating signaling or the de-activating signaling of the network device.

In some embodiments, in a case of the network device indicating the terminal device to activate or de-activate the RLC entity of the duplication transmission for the SL through the activating signaling or the de-activating signaling, the first terminal device may receive the second activating signaling from the network device. The second activating signaling is configured to indicate to activate the RLC entity used in the duplication transmission for the SL. The first terminal device determines to activate the RLC entity used in the duplication transmission for the SL based on the second activating signaling. Alternatively, the first terminal device may receive the second de-activating signaling from the network device. The second de-activating signaling is configured to indicate to deactivate the RLC entity used in the duplication transmission for the SL. The first terminal device determines to deactivate RLC entity used in the duplication transmission for the SL based on the second de-activating signaling.

In addition, the first indication information, the second indication information, and the third indication information described above may be transmitted separately, or two or three of them may be transmitted simultaneously, which is not limited in the present disclosure.

Compared to the configuration parameters of the SL duplication transmission being completely configured by the network device, the configuration parameters of the SL duplication transmission being determined by both the network device and the terminal device jointly may reduce a signaling overhead and a processing overhead on a network side, while the terminal device is required to participate determination of a part of parameters, and a requirement for the complexity of the terminal device is relatively high.

In some embodiments, the configuration information is configured by the target terminal device. The target terminal device is one of the first terminal device, the second terminal device, another third terminal device other than the first terminal device and the second terminal device. For example, the third terminal device may be the terminal device having the control function.

The introduction and illustration related to the configuration information may refer to the above embodiments, which are not repeated herein.

In some embodiments, the configuration information is transmitted to the first terminal device and/or the second terminal device through the direct communication interface. For example, the direct communication interface is the PC5 interface. Taking the first terminal device and the second terminal device performing the SL transmission process as an example, in a possible case, the third terminal device configures the configuration information and transmits the configuration information to the first terminal device and the second terminal device through the direct communication interface. In another possible case, the first terminal device configures the configuration information and transmits the configuration information to the second terminal device through the direct communication interface. In a further possible case, the second terminal device configures the configuration information and transmits the configuration information to the first terminal device through the direct communication interface. In other embodiments, when the first terminal device or the second terminal device serves as a transmitting end to configure the configuration information, the configuration information may be not transmitted to an opposite end device (i.e., a receiving end). In some embodiments, the configuration information is transmitted to the transmitting end of the first terminal device and the second terminal device through the direct communication interface.

For example, the direct communication interface is the PC5 interface. Taking the first terminal device and the second terminal device performing the SL transmission process as an example, in a possible case, the third terminal device configures the configuration information and transmits the configuration information to the transmitting end of the first terminal device and the second terminal device through the direct communication interface (For example, the first terminal device serves as the transmitting end, the third terminal device transmits the configuration information to the first terminal device through the direct communication interface. Alternatively, the second terminal device serves as the transmitting end, the third terminal device transmits the configuration information to the second terminal device through the direct communication interface.). In another possible case, the first terminal device serves as the receiving end, the second terminal device serves as the transmitting end, and the first terminal device configures the configuration information and transmits the configuration information to the second terminal device through the direct communication interface. In a further possible case, the second terminal device serves as the receiving end, the first terminal device serves as the transmitting end, and the second terminal device configures the configuration information and transmits the configuration information to the first terminal device through the direct communication interface. In other embodiments, when the first terminal device or the second terminal device serves as the transmitting end and configures the configuration information, the configuration information may be not transmitted to the opposite end device (i.e., the receiving end).

In yet other embodiments, the configuration information is forwarded to the transmitting end of the first terminal device and the second terminal device through the direct communication interface. Taking the first terminal device as the transmitting end as an example, when no interface exists between the network device or the terminal device having the control function and the first terminal device and communication cannot be directly performed, the network device or the terminal device having the control function may transmit the configuration information to a terminal device having an interface (i.e., a direct communication is available) with the first terminal device (e.g., the third terminal device, or the second terminal device ), and the terminal device the forward the configuration information to the first terminal device through the direct communication interface. In an embodiment, when the network device or the terminal device having the control function transmit the configuration information to the terminal device having the interface (i.e., the direct communication is available) with the first terminal device, the identity of the first terminal device may be carried in the configuration information.

In some embodiments, the configuration information is transmitted to the first terminal device and/or the second terminal device through the network device. Taking the first terminal device and the second terminal device performing the SL transmission process as an example, in a possible case, the third terminal device configures the configuration information and transmits the configuration information to the first terminal device and the second terminal device through the network device. In another possible embodiment, the first terminal device configures the configuration information and transmits the configuration information to the second terminal device through the network device. In a yet possible case, the second terminal device configures the configuration information and transmits the configuration information to the first terminal device through the network device. In some other embodiments, when the first terminal device or the second terminal device serves as the transmitting end and configures the configuration information, the configuration information may be not transmitted to the opposite end device (i.e., the receiving end).

In some embodiments, the configuration information is transmitted to the transmitting end of the first terminal device and the second terminal device through the network device. Taking the first terminal device and the second terminal device performing the SL transmission process as an example, in a possible case, the third terminal device configures the configuration information and transmits the configuration information to the transmitting end of the first terminal device and the second terminal device through the network device (For example, the first terminal device serves as the transmitting end, the third terminal device transmits the configuration information to the first terminal device through the network device. For another embodiment, the second terminal device serves as the transmitting end, the third terminal device transmits the configuration information to the second terminal device through the network device). In another possible case, the first terminal device serves as the receiving end, the second terminal device serves as the transmitting end, and the first terminal device configures the configuration information and transmits the configuration information to the second terminal device through the network device. In a yet possible case, the second terminal device serves as the receiving end, the first terminal device serves as the transmitting end, and the second terminal device configures the configuration information and transmits the configuration information to the first terminal device through the network device. In some other embodiments, when the first terminal device or the second terminal device serves as the transmitting end and configures the configuration information, the configuration information may be not transmitted to the opposite end device (i.e., the receiving end).

By the terminal device determining the configuration parameters of the SL duplication transmission by itself and omitting the network device, the signaling overhead and the processing overhead at the network side may be reduced to the maximum, whereas a terminal behavior may be out of the control of the network to a certain degree.

In some embodiments, the signaling described in the above embodiments is configured by the target terminal device. The signaling includes at least one of the first activating signaling, the first de-activating signaling, the second activating signaling, the second de-activating signaling, and the third activating signaling.

In some embodiments, the signaling is transmitted to the first terminal device and/or the second terminal device through the direct communication interface.

In some embodiments, the signaling is transmitted to the transmitting end of the first terminal device and the second terminal device through the direct communication interface.

In some embodiments, the signaling is transmitted to the first terminal device and/or the second terminal device through the network device.

In some embodiments, the signaling is transmitted to the transmitting end of the first terminal device and the second terminal device through the network device.

In a case of the signaling being configured by the target terminal device, a transmitting manner of the signaling is similar to the transmitting manner of the configuration information, which may refer to the introduction and illustration related to the transmitting manner of the configuration information in the above description and are not repeated herein.

The technical solution of the present disclosure is introduced and illustrated through some embodiments in the following.

In some embodiments, for the duplication transmission between UEs, the duplication transmission configuration is indicated to the UE in a manner of the network pre-configuring or configuring. UE1 and UE2 employs duplication transmission parameters pre-configured and configured by the network to perform the duplication transmission process. It is noted that, the duplication transmission is appliable to the unicast transmission or the DRB corresponding to the unicast, but does not exclude to be applied to the multicast or the broadcast. It is noted that, the SL duplication transmission is applicable to the CA scenario, i.e., the CA duplication transmission.

A specific implementation process may include steps 1-3 in the following.

Step 1: for the duplication transmission between UEs, the duplication transmission configuration is pre-configured or configured for the UE1 and UE2 by the network. 1 includes at least one of 1)-5) in the following.
1) the duplication transmission configuration is for between UE1 and UE2.
2) the duplication transmission configuration is targeted at the DRB and/or the SRB.
3) the duplication transmission configuration includes at least one of moreThanOneRLC and moreThanTwoRLC-DRB.
4) the duplication transmission configuration includes at least one of at least one RLC/LCH identity corresponding to the RB, the primary path information (a cell group to which the primary path belongs, and/or, a LCH identity corresponding to the primary path), DataSplitThreshold, whether the duplication transmission is activated, the secondary path information (a cell group to which the secondary path belongs, and/or, a LCH identity corresponding to the secondary path), the activated RLC entity identity, and the allowed carrier (different paths may use different carriers).
5) when the duplication transmission configuration is for between UE1 and UE2, the network indicates the UE identity corresponding to the duplication transmission configuration at the same time, i.e., a mapping relationship between the duplication transmission parameters and UE-UE, and/or, the RB identity.

For 5), further, UE1→UE2, or UE2→UE1, or UE1-UE2 may be targeted at for configuration.

Step 2: the UE receives a duplication transmission pre-configuration or configuration from the network. The step 2 may include the cases 1-3 in the following.

Case 1: The duplication transmission pre-configuration or configuration in 1 above may be indicated to two relevant UEs by the network, respectively. For example, gNB indicates the configuration to the UE1 and UE2 through the RRC messages (e.g., SL-configDedicated, or SL-PDCP-config).

Case 2: The duplication transmission pre-configuration or configuration in 1 above is indicated by the network to one of the UEs (e.g., through the Uu interface), which is exchanged to the other one of the UEs (e.g., through the PC5 interface) by the one of the UEs. The base station indicates the duplication transmission pre-configuration or configuration in 1 to the one of the UEs. For example, i. the base station indicates to any one of the two UEs; ii. the base station indicates to the UE corresponding to a duplication transmission transmitting entity, or a transmitting end UE.

Case 3: The duplication transmission pre-configuration or configuration in 1 above is indicated by the network to the one of the UEs (e.g., through the Uu interface). For example, i. the base station indicates to the UE corresponding to the duplication transmission transmitting entity, or the transmitting end UE.

Step 3: the UE1 and the UE2 perform the transmission through the PC5 interface. When the data is transmitted from the UE1 to the UE2, the UE1 performs the duplication transmission based on a received duplication transmission configuration of SL UE1-UE2. The step 3 may include 1)-3) in the following.
1) The PDCP of the UE1 performs the duplication transmission determination, and/or, determines to which RLC entities the data and the data duplicate are transmitted.
2) in the case of not performing the duplication transmission or the duplication transmission being de-activated, whether to perform the spilt transmission is determined. In a case of performing the spilt transmission, a data spilt transmission process is performed through the primary path and the second path.
3) In an embodiment, the UE may report the assistance information to the base station for the base station to determine to the activated RLC or the de-activated RLC.

In particular, the duplication transmission of the 2-leg may also be the duplicated transmission configuration pre-configured by the network.

In this embodiment, the UE acquires the duplication transmission configuration by network configuring the duplication transmission parameters between UE-UE and performs the duplication transmission based on the duplication transmission parameters configured by the network. The solution makes the UE-UE duplication transmission under control of a network indication as far as possible.

In some embodiments, for the duplication transmission between the UEs, whether the duplication transmission configuration is used is indicated to the UE in the manner of the network pre-configuring or configuring. In an embodiment, for a duplication transmission architecture of up to 4-leg, a path resource employed is determined by the UE (e.g., the transmitting end UE) itself, and the UE1 correspondingly achieves the duplication transmission with the UE2. It is noted that, the duplication transmission is appliable to the unicast transmission or the DRB corresponding to the unicast, but does not exclude to be applied to the multicast or the broadcast. It is noted that, the SL duplication transmission is applicable to the CA scenario, i.e., the CA duplication transmission.

A specific implementation process may include steps 1-3 in the following.

Step 1: for the duplication transmission between UEs, the duplication transmission configuration is pre-configured or configured for the UE1 and UE2 by the network. The step 1 includes at least one of 1)-6) in the following.
1) the duplication transmission configuration is for between UE1 and UE2, or is for or targeted at a transmitting (TX) pool.
2) the duplication transmission configuration is targeted at the DRB and/or the SRB.
3) the duplication transmission configuration includes at least one of 2-leg duplication and up to 4-leg duplication.
4) the duplication transmission configuration includes at least one of DataSplitThreshold, whether the duplication is activated, the primary path information (the cell group to which the primary path belongs, and/or, the LCH identity corresponding to the primary path), at least one RLC/LCH identity corresponding to the RB, and the allowed carrier (different paths may use different carriers).
5) when the duplication transmission configuration is for between UE1 and UE2, the network indicates the UE identity corresponding to the duplication transmission configuration at the same time, i.e., the mapping relationship between the duplication transmission parameters and UE-UE, and/or, the RB identity.
   For 5), further, UE1→UE2, or UE2→UE1, or UE1-UE2 may be targeted at for configuration.
6) in an embodiment, the network indicates whether the UE is allowed to determine the duplication transmission configuration.

Step 2: the UE receives the duplication transmission pre-configuration or configuration from the network. The step 2 includes the cases 1-3 in the following.

Case 1: The duplication transmission pre-configuration or configuration in 1 above may be indicated to two relevant UEs by the network, respectively. For example, gNB indicates the configuration to the UE1 and UE2 through the RRC messages (e.g., SL-configDedicated, or SL-PDCP-config).

Case 2: The duplication transmission pre-configuration or configuration in 1 above is indicated by the network to one of the UEs (e.g., through the Uu interface), which is exchanged to the other one of the UEs (e.g., through the PC5 interface) by the one of the UEs. The base station indicates the duplication transmission pre-configuration or configuration in 1 to the one of the UEs. For example, i. the base station indicates to any one of the two UEs; ii. the base station indicates to the UE corresponding to a duplication transmission transmitting entity, or a transmitting end UE.

Case 3: The duplication transmission pre-configuration or configuration in 1 above is indicateed by the network to the one of the UEs (e.g., through the Uu interface). For example, i. the base station indicates to the UE corresponding to the duplication transmission transmitting entity, or the transmitting end UE.

Step 3: the UE1 and the UE2 perform the transmission through the PC5 interface. When the data is transmitted from the UE1 to the UE2, the UE1 performs the duplication transmission based on the received duplication transmission configuration of SL UE1-UE2. The step 3 may include 1)-5) in the following.
1) The PDCP of the UE1 determines whether to perform the duplication transmission or determines whether to perform the duplication transmission for the DRB/SRB based on duplication transmission configuration information of the base station
2) in an embodiment, UE1 PDCP determines at least one of an identity of the DRB for which the duplication transmission is performed, an identity of the SRB for which the duplication transmission is performed, and an identity of the RLC entity of performing the duplication transmission.
3) the UE1 PDCP transmits the data and the data duplicate to the RB for which the duplication transmission is performed and the determined RLC entity of transmitting the duplication data.
4) the UE1 PDCP performs the single RLC entity transmission in a case of determining not to performing the duplication transmission based on the network indication. Alternatively, the UE1 PDCP determines whether to perform the spilt transmission based on network configuration information (e.g., a spilt threshold) in the case of determining not to performing the duplication transmission based on the network indication. In a case of the spilt transmission being performed, the primary path and the secondary path are determined and are employed to perform the data spilt transmission.
5) in an embodiment, the UE may report the assistance information to the base station for the base station to determine the activated RLC or the de-activate RLC

In particular, the duplication transmission of the 2-leg may also be the duplicated transmission configuration pre-configured by the network.

In this embodiment, the UE and the network jointly determine the information of the duplication transmission to achieve the duplication transmission between UE-UE. Compared to the previous embodiment, network signaling configuration may be reduced, while the UE is required to participate the determination of the part of the duplication transmission parameters and the and a requirement for the complexity of the UE is relatively high.

In some embodiments, for the duplication transmission between the UEs, the UE determines whether to perform the duplication transmission and the configuration information of the duplication transmission. The UE1 and the UE2 employs the duplication transmission configuration determined by the UE to perform the duplication transmission. It is noted that, the duplication transmission is appliable to the unicast transmission or the DRB corresponding to the unicast, but does not exclude to be applied to the multicast or the broadcast. It is noted that, the SL duplication transmission is applicable to the CA scenario, i.e., the CA duplication transmission.

A specific implementation process may include steps 1-3 in the following.

step 1: For the duplication transmission between UEs, UE configures or determines the duplication transmission configuration for the UE1 and the UE2. 1 includes at least one of 1)-6) in the following.
1) the duplication transmission configuration is for between UE1 and UE2, or is for or targeted at the TX pool (for TX pools between the UE and all possible UEs).
2) the duplication transmission configuration is targeted at the DRB and/or the SRB.
3) the duplication transmission configuration includes at least one of 2-leg duplication and up to 4-leg duplication.
4) the duplication transmission configuration includes at least one of at least one RLC/LCH identity corresponding to the RB, DataSplitThreshold, the primary path information (the cell group to which the primary path belongs, and/or, the LCH identity corresponding to the primary path), whether the duplication is activated, the secondary path information (the cell group to which the secondary path belongs, and/or, the LCH identity corresponding to the secondary path), an activated RLC entity identity, and the allowed carrier (different paths may use different carriers).
5) in an embodiment, when the duplication transmission configuration is for between UE1 and UE2, the UE identity corresponding to the duplication transmission configuration is indicated while this configuration is transmitted, i.e., the mapping relationship between the duplication transmission parameters and UE-UE, and/or, the RB identity.
   For 5), further, UE1→UE2, or UE2→UE1, or UE1-UE2 may be targeted at for configuration.
6) in an embodiment, the network indicates whether the UE is allowed to determine the duplication transmission configuration.

Step 2: In an embodiment, the UE transmits the duplication transmission configuration between UE-UE. In an embodiment, when the UE of the duplication transmission configuration is not the transmitting end UE, the duplication transmission configuration is required to be transmitted to the opposite end UE. The step 2 may include at least one of cases 1-3 in the following.

Case 1: The duplication transmission configuration in 1 above may be indicated directly by the UE to the opposite end UE (e.g., through the PC5 interface).

Case 2: The duplication transmission configuration in 1 above is indicated by the UE to one of the UEs (e.g., through the Uu interface) through the network.

Step 3: The UE1 and the UE2 performs the transmission through the PC5 interface. When the data is transmitted from the UE1 to the UE2, the UE1 determines whether to perform the duplication transmission and/or performs the duplication transmission or a non-duplication transmission, based on the description in the step 1 and/or the step 2 above.

In this embodiment, the duplication transmission between UE-UE is determined and performed by the UE itself. Compared to the previous embodiment, the network configuration is omitted, while the UE behavior is out of the control of the network to a certain degree.

The following is apparatus embodiments of the present disclosure. Undisclosed details of the apparatus embodiments of the present disclosure may refer to method embodiments of the present disclosure.

As shown in FIG. 5, FIG. 5 is a block view of a duplication transmission apparatus for the SL according to an embodiment of the present disclosure. The apparatus has functions of implementing method examples at a first terminal device side described above. The functions may be implemented through a hardware, or may also be implemented through the hardware executing a corresponding software. The apparatus may be the first terminal device described in the above or may be arranged in the first terminal device. As shown in FIG. 5, the apparatus 500 may include an acquisition module 510 and a transmission module 520.

The acquisition module 510 is configured to acquire configuration information. The configuration information is configured to configure a duplication transmission for the SL; and
The transmission module 520 is configured to perform a SL transmission process with a second terminal device based on the configuration information.

In some embodiments, the configuration information conforms to at least one case of the configuration information being targeted at the first terminal device and/or the second terminal device; the configuration information being targeted at a transmitting resource pool used by the first terminal device and/or the second terminal device, wherein the configuration information corresponding to the transmitting resource pool is common for a plurality of terminal devices, or the configuration information corresponding to the transmitting resource pool is dedicated for the first terminal device and/or the second terminal device; the configuration information being targeted at a receiving resource pool used by the first terminal device and/or the second terminal device, wherein the configuration information corresponding to the receiving resource pool is common for the plurality of terminal devices, or the configuration information corresponding to the transmitting resource pool is dedicated for the first terminal device and/or the second terminal device; and the configuration information being targeted at a DRB and/or a SRB.

In some embodiments, the configuration information includes at least one of configuration information corresponding to a duplication transmission employing 2 RLC entities and configuration information corresponding to a duplication transmission employing greater than 2 RLC entities.

In some embodiments, the configuration information includes at least one of at least one RLC entity identity or LCH identity corresponding to a RB, primary path information, indication information of whether the duplication transmission is activated, secondary path information, an activated RLC entity identity, an activated RLC entity group identity, and an allowed carrier.

In some embodiments, the configuration information includes at least one of an identity of the first terminal device and/or the second terminal device and an RB identity.

In some embodiments, the configuration information includes at least one of an enable identity of a split transmission and a threshold of the split transmission.

In some embodiments, the transmission module 520 is configured to perform at least one of determining whether to perform the duplication transmission for the SL based on the configuration information; determining whether to perform a duplication transmission for an DRB and/or a SRB based on the configuration information; determining at least one of the DRB for which the duplication transmission is performed, the SRB for which the duplication transmission is performed, an RLC entity of performing the duplication transmission, an activated RLC entity, a RLC entity group of performing the duplication transmission, an activated RLC entity group, and the number of duplicates for which the duplication transmission is performed, based on the configuration information; and determining RLC entities to which data and a data duplicate in the duplication transmission are transmitted, respectively, based on the configuration information.

In some embodiments, the transmission module 520 is further configured to determine whether to perform a split transmission for the SL in a case of determining not to perform the duplication transmission for the SL or the duplication transmission for the SL being de-activated or not configured; and perform a data split transmission through a primary path and a secondary path in a case of determining to perform the split transmission for the SL.

In some embodiments, the transmission module 520 is further configured to perform a single RLC entity transmission in a case of determining not to perform the duplication transmission for the SL or the duplication transmission for the SL being de-activated or not configured.

In some embodiments, the transmission module 520 is further configured to transmit assistance information to a network device. The assistance information is configured for the network device to determine at least one of a configured duplication transmission of the SL, an activated and/or de-activated duplication transmission of the SL, and an activated and/or de-activated RLC entity.

In some embodiments, the configuration information is configured or pre-configured by the network device.

In some embodiments, the network device is configured to transmit the configuration information to the first terminal device and the second terminal device, respectively; or the network device is configured to transmit the configuration information to the first terminal device, and the first terminal device is configured to transmit the configuration information to the second terminal device; or the network device is configured to transmit the configuration information to the first terminal device and the first terminal device is configured not to transmit the configuration information to the second terminal device; or, the network device is configured to transmit the configuration information to the second terminal device and the second terminal device is configured not to transmit the configuration information to the first terminal device; or the network device is configured to transmit the configuration information to a transmitting end of the first terminal device and the second terminal device.

In some embodiments, the configuration information is configured by a target terminal device, and the target terminal device is one of the first terminal device, the second terminal device, and a third terminal device other than the first terminal device and the second terminal device.

In some embodiments, the configuration information is transmitted to the first terminal device and/or the second terminal device through a direct communication interface; or the configuration information is transmitted to a transmitting end of the first terminal device and the second terminal device through a direct communication interface; or the configuration information is transmitted to the first terminal device and/or the second terminal device through a network device; or the configuration information is transmitted to a transmitting end of the first terminal device and the second terminal device through a network device.

In some embodiments, the configuration information includes all configuration parameters required to perform the SL transmission process; or the configuration information includes a part of configuration parameters required to perform the SL transmission process, and the first terminal device determines a remaining part of the configuration parameters required to perform the SL transmission process by itself.

In some embodiments, the transmission module 520 is further configured to perform at least one of receiving first indication information from a network device, wherein the first indication information is configured to indicate whether a terminal device is allowed to determine configuration parameters of the duplication transmission for the SL by itself; receiving second indication information from a network device, wherein the second indication information is configured to indicate whether the terminal device is allowed to determine to activate or de-activate the duplication transmission for the SL by itself; and receiving third indication information from the network device, wherein the third indication information is configured to indicate whether the terminal device is allowed to determine whether to activate or de-activate a RLC entity of the duplication transmission for the SL by itself.

In some embodiments, the acquisition module 510 is further configured to perform at least one of acquiring a first activating signaling, wherein the first activating signaling is configured to indicate to activate the duplication transmission for the SL; acquiring a first de-activating signaling, wherein the first de-activating signaling is configured to indicate to de-activate the duplication transmission for the SL; acquiring a second activating signaling, wherein the second activating signaling is configured to indicate a RLC entity used for activating the duplication transmission for the SL; acquiring a second de-activating signaling, wherein the second de-activating signaling is configured to indicate a RLC entity used for de-activating the duplication transmission for the SL; and acquiring a third activating signaling, wherein the third activating signaling is configured to indicate a RLC entity used for activating or employing a split transmission, or indicate to activate or employ the split transmission.

In some embodiments, signaling is configured or pre-configured by a network device, and the signaling includes at least one of the first activating signaling, the first de-activating signaling, the second activating signaling, the second de-activating signaling, and the third activating signaling.

In some embodiments, the network device is configured to transmit the signaling to the first terminal device and the second terminal device, respectively; or the network device is configured to transmit the signaling to the first terminal device and the first terminal device is configured to transmit the signaling to the second terminal device; or, the network device is configured to transmit the signaling to the second terminal device and the second terminal device is configured to transmit the signaling to the first terminal device; or the network device is configured to transmit the signaling to the first terminal device and the first terminal device is configured not to transmit the signaling to the second terminal device; or, the network device is configured to transmit the signaling to the second terminal device and the second terminal device is configured not to transmit the signaling to the first terminal device; or the network device is configured to transmit the signaling to a transmitting end of the first terminal device and the second terminal device.

In some embodiments, signaling is configured by a target terminal device, the signaling includes at least one of the first activating signaling, the first de-activating signaling, the second activating signaling, the second de-activating signaling, and the third activating signaling, and the target terminal device is one of the first terminal device, the second terminal device, and a third terminal device other than the first terminal device and the second terminal device.

In some embodiments, the signaling is transmitted to the first terminal device and/or the second terminal device through a direct communication interface; or the signaling is transmitted to a transmitting end of the first terminal device and the second terminal device through a direct communication interface; or the signaling is transmitted to the first terminal device and/or the second terminal device through a network device; or the signaling is transmitted to a transmitting end of the first terminal device and the second terminal device through a network device.

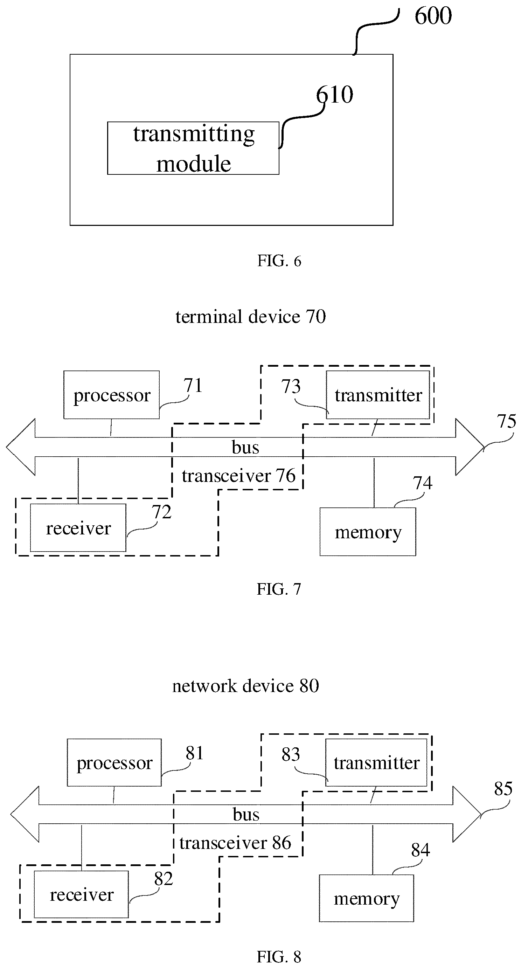

As shown in FIG. 6, FIG. 6 is a block view of a duplication transmission apparatus for SL according to another embodiment of the present disclosure. The apparatus has functions of implementing method examples at a network side described above. The functions may be implemented through the hardware, or may also be implemented through the hardware executing a corresponding software. The apparatus may be the network device described above or may be arranged in the network device. As shown in FIG. 6, the apparatus 600 may include a transmitting module 610.

The transmitting module 610 is configured to transmit configuration information to at least one terminal device. The configuration information is configured to configure a duplication transmission for the SL.

In some embodiments, the configuration information conforms to at least one case of the configuration information being targeted at the first terminal device and/or the second terminal device; the configuration information being targeted at a transmitting resource pool used by the first terminal device and/or the second terminal device, wherein the configuration information corresponding to the transmitting resource pool is common for a plurality of terminal devices, or the configuration information corresponding to the transmitting resource pool is dedicated for the first terminal device and/or the second terminal device; the configuration information being targeted at a receiving resource pool used by the first terminal device and/or the second terminal device, wherein the configuration information corresponding to the receiving resource pool is common for the plurality of terminal devices, or the configuration information corresponding to the transmitting resource pool is dedicated for the first terminal device and/or the second terminal device; and the configuration information being targeted at a DRB and/or a SRB.

In some embodiments, the configuration information includes at least one of configuration information corresponding to a duplication transmission employing 2 RLC entities and configuration information corresponding to a duplication transmission employing greater than 2 RLC entities.

In some embodiments, the configuration information includes at least one of at least one RLC entity identity or LCH identity corresponding to a RB, primary path information, indication information of whether the duplication transmission is activated, secondary path information, an activated RLC entity identity, an activated RLC entity group identity, and an allowed carrier.

In some embodiments, the configuration information includes at least one of an identity of the first terminal device and/or the second terminal device and an RB identity.

In some embodiments, the configuration information includes at least one of an enable identity of a split transmission and a threshold of the split transmission.

In some embodiments, the configuration information is configured to determine at least one of whether to perform the duplication transmission for the SL; whether to perform a duplication transmission for an DRB and/or a SRB; a DRB in which the duplication transmission is performed; an SRB in which the duplication transmission is performed; an RLC entity in which the duplication transmission is performed; an activated RLC entity; a RLC entity group in which the duplication transmission is performed; an activated RLC entity group; the number of duplicates for which the duplication transmission is performed; and RLC entities to which data and a data duplicate in the duplication transmission are transmitted, respectively.

In some embodiments, the transmitting module 610 is configured to transmit the configuration information to the first terminal device and the second terminal device, respectively; or transmit the configuration information to the first terminal device and the first terminal device transmitting the configuration information to the second terminal device; or, transmit the configuration information to the second terminal device and the second terminal device sending the configuration information to the first terminal device; or transmit the configuration information to the first terminal device and the first terminal device not transmitting the configuration information to the second terminal device; or, transmit the configuration information to the second terminal device and the second terminal device not transmitting the configuration information to the first terminal device; or transmit the configuration information to a transmitting end of the first terminal device and the second terminal device. The first terminal device and the second terminal device are a group of terminal devices performing a SL transmission process.

In some embodiments, the transmitting module 610 is further configured to perform at least one of transmitting first indication information to the at least one terminal device, wherein the first indication information is configured to indicate whether the at least one terminal device is allowed to determine configuration parameters of the duplication transmission for the SL by itself; transmitting second indicating information to the at least one terminal device, wherein the second indication information is configured to indicate whether the terminal device is allowed to determine to activate or de-activate the duplication transmission for the SL by itself; and transmitting third indicating information to the at least one terminal device, wherein the third indicating information is configured to indicate whether the terminal device is allowed to determine whether to activate or de-activate a RLC entity of the duplication transmission for the SL by itself.

In some embodiments, the apparatus 600 further includes a receiving module and a determining module.

The receiving module is configured to receive assistance information transmitted by the terminal device.

The determining module is configured to perform at least one of determining a configured duplication transmission of the SL, determining an activated and/or de-activated duplication transmission of the SL, and determining an activated and/or de-activated RLC entity.

In some embodiments, the configuration information includes all configuration parameters required to perform a SL transmission process; or the configuration information includes a part of configuration parameters required to perform the SL transmission process, and the at least one terminal device determines a remaining part of the configuration parameters required to perform the SL transmission process by itself.

In some embodiments, the transmitting module 610 is further configured to transmit signaling to the at least one terminal device. The signaling includes at least one of a first activating signaling, configured to indicate to activate the duplication transmission for the SL; a first de-activating signaling, configured to indicate to de-activate the duplication transmission for the SL; a second activating signaling, configured to indicate a RLC entity used for activating the duplication transmission for the SL; a second de-activating signaling, configured to indicate a RLC entity used for de-activating the duplication transmission for the SL; and a third activating signaling, configured to indicate a RLC entity used for activating or employing a split transmission, or indicate to activate or employ the split transmission.

In some embodiments, the transmitting module 610 is configured to transmit the signaling to a first terminal device and a second terminal device, respectively; or transmit the signaling to the first terminal device and the first terminal device sending the signaling to the second terminal device; or, transmit the signaling to the second terminal device and the second terminal device transmitting the signaling to the first terminal device; or transmit the signaling to the first terminal device and the first terminal device not transmitting the signaling to the second terminal device; or, transmit the signaling to the second terminal device and the second terminal device not transmitting the signaling to the first terminal device; or transmit the signaling to a transmitting end of the first terminal device and the second terminal device; The first terminal device and the second terminal device are a group of terminal devices performing a SL transmission process.

As shown in FIG. 7, FIG. 7 is a structural schematic view of a terminal device 70 according to an embodiment of the present disclosure. For example, the terminal device 70 may be configured to perform the duplication transmission method for the SL at the terminal device side. The terminal device 70 may include a processor 71, a receiver 72, a transmitter 73, a memory 74, and a bus 75.

The processor 71 includes one or more processing cores. The processor 71 performs various function applications and information processing through running a software program and module.

The receiver 72 and the transmitter 73 may be implemented as a transceiver 76. The transceiver 76 may be a communication chip.

The memory 74 is connected to the processor 71 through a bus 75.

The memory 74 may be configured to store a computer program, and the processor 71 may be configured to execute the computer program to implement various operations performed by the terminal device in the method embodiments described above.

In addition, the memory 74 may be implemented by any type of volatile or non-volatile storage devices or a combination thereof. The volatile or non-volatile storage devices include, but are not limited to, a Random-Access Memory (RAM), a Read-Only Memory (ROM), an Erasable Programmable Read-Only Memory (EPROM), an Electrically Erasable Programmable Read-Only Memory (EEPROM), a flash memory or other solid-state storage technologies, a Compact Disc Read-Only Memory (CD-ROM), a high-density Digital Video Disc (DVD), or other optical storage, a tape cartridge, a tape, a disk storage, or other magnetic storage devices.

In some embodiments, the processor 71 is configured to acquire configuration information. The configuration information is configured to configure a duplication transmission for the SL. The he processor 71 is further configured to perform a SL transmission process with a second terminal device based on the configuration information.

Details which are not described in detail in the above embodiment may refer to the introduction and illustration of the method embodiments in the above description, which are not repeated herein.

As shown in FIG. 8, FIG. 8 is a structural schematic view of a network device 80 according to an embodiment of the present disclosure. For example, the network device 80 may be configured to perform the duplication transmission method for the SL at the network device side. The network device 80 may include a processor 81, a receiver 82, a transmitter 83, a memory 84, and a bus 85.

The processor 81 includes one or more processing cores. The processor 81 performs various function applications and information processing through running a software program and module.

The receiver 82 and the transmitter 83 may be implemented as a transceiver 86. The transceiver 86 may be a communication chip.

The memory 84 is connected to the processor 81 through a bus 85.

The memory 84 may be configured to store a computer program, and the processor 81 may be configured to execute the computer program to implement various operations performed by the network device in the method embodiments described above.

In addition, the memory 84 may be implemented by any type of volatile or non-volatile storage devices or the combination thereof. The volatile or non-volatile storage devices include, but are not limited to, the RAM, the ROM, the EPROM, the EEPROM, the flash memory or other solid-state storage technologies, the CD-ROM, the high-density DVD, or other optical storage, the tape cartridge, the tape, the disk storage, or other magnetic storage devices.

In some embodiments, the transceiver 86 is configured to transmit configuration information to at least one terminal device, wherein the configuration information is configured to configure a duplication transmission for the SL.

Details which are not described in detail in the above embodiment may refer to the introduction and illustration of the method embodiments in the above description, which are not repeated herein.

The embodiments of the present disclosure also provide a computer-readable storage medium. The storage medium stores a computer program. The computer program is configured to be executed by a processor of a terminal device or a network device to implement the duplication transmission method for the SL described above.

In an embodiment, the computer-readable storage medium may include the ROM, the RAM, a Solid State Drive (SSD), or a disk, etc. The RAM may include a Resistance Random Access Memory (ReRAM) and a Dynamic Random Access Memory (DRAM).

The embodiments of the present disclosure also provide a chip. The chip includes a programmable logic circuit and/or program instructions. When the chip is run on the terminal device or the network device, the duplication transmission method for the SL described above may be achieved.

The embodiments of the present disclosure also provide a computer program product or computer program. The computer program product or the computer program includes computer instructions. The computer instructions are stored in a computer-readable storage medium. A processor of THE terminal device or the network device reads and executes the computer instructions from the computer-readable storage medium to implement the duplication transmission method for the SL described above.

It should be understood that the terms "instruct" or "indicate" mentioned in the embodiments of the present disclosure may refer to instructing or indicating directly, or instructing or indicating indirectly, or having an associated relationship. For example, A instructs or indicates B may indicate that A instructs or indicates B directly, e.g., B may acquire information through A; or may also indicate that A instructs or indicates B indirectly, e.g., A instructs C and B may acquire information through C; or may also indicate that A and B have an association relationship.

In the description of the embodiments of the present disclosure, the term "corresponding" may indicate that the two have a direct or indirect corresponding relationship, or may also indicate that the two have an associated relationship, or may be a relationship of instructing and being instructed and configuring and being configured.

In the description of the embodiments of the present disclosure, the term "multiple" refers to two or more. The term "and/or" indicates an association relationship between associated objects, which may indicate three relationships may exist therein. For example, A "and/or" B may indicate A exists alone, both A and B exist, and B exists alone. A character "/" generally indicates associated objects before and after "/" have a "or" relationship.

In addition, numerals of the operations described herein only exemplarily shows a possible execution order among the operations. In some other embodiments, the above operations may also be executed in other orders. For example, two operations of different numerals are performed at the same time, or the two operations of different numerals are performed in a reverse order of the drawings, which is not limited in the present disclosure.

Those skilled in the art may realize that the functions described in the embodiments of the present disclosure may be implemented through the hardware, a software, a firmware, or any combination thereof in one or more examples above. When implemented through the software, the functions may be stored in a computer-readable medium or transmitted as one or more instructions or codes on the computer-readable medium. Computer-readable media include a computer storage medium and a communication medium. The communication medium includes any medium convenient for the transmission of the computer program from one location to another location. The storage medium may be any available medium capable of being accessed by a general purpose computer or a specialized computer.

## Claims

1. A duplication transmission method for a sidelink ,SL, performed by a first terminal device and comprises:
acquiring (410) configuration information, wherein the configuration information is configured to configure a duplication transmission for the SL; and
performing (420) a SL transmission process with a second terminal device based on the configuration information;
the configuration information conforms to at least one case of:
the configuration information being targeted at a transmitting resource pool used by the first terminal device and/or the second terminal device, wherein the configuration information corresponding to the transmitting resource pool is dedicated for the first terminal device and the second terminal device, the transmitting resource pool comprises resource information available to transmit data in the SL transmission process, and the resource information comprises a frequency resource and a time slot resource;
the configuration information being targeted at a receiving resource pool used by the first terminal device and/or the second terminal device, wherein the configuration information corresponding to the receiving resource pool is dedicated for the first terminal device and the second terminal device, the receiving resource pool comprises resource information available to receive data in the SL transmission process, and the resource information comprises a frequency resource and a time slot resource.

2. The method according to claim 1, wherein the configuration information further conforms to at least one case of:
the configuration information being targeted at the first terminal device and/or the second terminal device; and
the configuration information being targeted at a data radio bearer ,DRB, and/or a signaling radio bearer, SRB.

3. The method according to claim 1 or 2, wherein the configuration information comprises at least one of configuration information corresponding to a duplication transmission employing 2 radio link control, RLC, ' entities and configuration information corresponding to a duplication transmission employing greater than 2 RLC entities; or
wherein the configuration information comprises at least one of at least one RLC entity identity or logical channel 'LCH' identity corresponding to a radio bearer ,RB, primary path information, indication information of whether the duplication transmission is activated, secondary path information, an activated RLC entity identity, an activated RLC entity group identity, and an allowed carrier; or
wherein the configuration information comprises at least one of an identity of the first terminal device and/or the second terminal device and an RB identity; or
wherein the configuration information comprises at least one of an enable identity of a split transmission and a threshold of the split transmission.

4. The method according to any one of claims 1 to 3, wherein the performing (420) a SL transmission process with a second terminal device based on the configuration information, comprises:
determining whether to perform the duplication transmission for the SL based on the configuration information;
determining whether to perform a duplication transmission for an DRB and/or a SRB based on the configuration information;
determining at least one of the DRB for which the duplication transmission is performed, the SRB for which the duplication transmission is performed, an RLC entity of performing the duplication transmission, an activated RLC entity, a RLC entity group of performing the duplication transmission, an activated RLC entity group, and the number of duplicates for which the duplication transmission is performed, based on the configuration information; and
determining RLC entities to which data and a data duplicate in the duplication transmission are transmitted, respectively, based on the configuration information.

5. The method according to any one of claims 1 to 4, further comprising:
determining whether to perform a split transmission for the SL in a case of determining not to perform the duplication transmission for the SL or the duplication transmission for the SL being de-activated or not configured; and
performing a data split transmission through a primary path and a secondary path in a case of determining to perform the split transmission for the SL; and/or
wherein the method further comprises:
performing a single RLC entity transmission in a case of determining not to perform the duplication transmission for the SL or the duplication transmission for the SL being de-activated or not configured.

6. The method according to any one of claims 1 to 5, wherein the configuration information is configured or pre-configured by the network device;
wherein the network device is configured to transmit the configuration information to the first terminal device and the second terminal device, respectively; or
the network device is configured to transmit the configuration information to the first terminal device, and the first terminal device is configured to transmit the configuration information to the second terminal device; or
the network device is configured to transmit the configuration information to the first terminal device and the first terminal device is configured not to transmit the configuration information to the second terminal device; or, the network device is configured to transmit the configuration information to the second terminal device and the second terminal device is configured not to transmit the configuration information to the first terminal device; or
the network device is configured to transmit the configuration information to a transmitting end of the first terminal device and the second terminal device.

7. The method according to any one of claims 1 to 5, wherein the configuration information is configured by a target terminal device, and the target terminal device is one of the first terminal device, the second terminal device, and a third terminal device other than the first terminal device and the second terminal device; and/or
wherein the configuration information is transmitted to the first terminal device and/or the second terminal device through a direct communication interface; or
the configuration information is transmitted to a transmitting end of the first terminal device and the second terminal device through a direct communication interface; or
the configuration information is transmitted to the first terminal device and/or the second terminal device through a network device; or
the configuration information is transmitted to a transmitting end of the first terminal device and the second terminal device through a network device; and/or
wherein the configuration information comprises all configuration parameters required to perform the SL transmission process; or
the configuration information comprises a part of configuration parameters required to perform the SL transmission process, and the first terminal device determines a remaining part of the configuration parameters required to perform the SL transmission process by itself.

8. The method according to any one of claims 1 to 7, further comprising at least one of:
acquiring a first activating signaling, wherein the first activating signaling is configured to indicate to activate the duplication transmission for the SL;
acquiring a first de-activating signaling, wherein the first de-activating signaling is configured to indicate to de-activate the duplication transmission for the SL;
acquiring a second activating signaling, wherein the second activating signaling is configured to indicate a RLC entity used for activating the duplication transmission for the SL;
acquiring a second de-activating signaling, wherein the second de-activating signaling is configured to indicate a RLC entity used for de-activating the duplication transmission for the SL; and
acquiring a third activating signaling, wherein the third activating signaling is configured to indicate a RLC entity used for activating or employing a split transmission, or indicate to activate or employ the split transmission.

9. The method according to claim 8, wherein signaling is configured or pre-configured by a network device, and the signaling comprises at least one of the first activating signaling, the first de-activating signaling, the second activating signaling, the second de-activating signaling, and the third activating signaling; and/or
wherein the network device is configured to transmit the signaling to the first terminal device and the second terminal device, respectively; or
the network device is configured to transmit the signaling to the first terminal device and the first terminal device is configured to transmit the signaling to the second terminal device; or, the network device is configured to transmit the signaling to the second terminal device and the second terminal device is configured to transmit the signaling to the first terminal device; or
the network device is configured to transmit the signaling to the first terminal device and the first terminal device is configured not to transmit the signaling to the second terminal device; or, the network device is configured to transmit the signaling to the second terminal device and the second terminal device is configured not to transmit the signaling to the first terminal device; or
the network device is configured to transmit the signaling to a transmitting end of the first terminal device and the second terminal device.

10. The method according to claim 8, wherein signaling is configured by a target terminal device, the signaling comprises at least one of the first activating signaling, the first de-activating signaling, the second activating signaling, the second de-activating signaling, and the third activating signaling, and the target terminal device is one of the first terminal device, the second terminal device, and a third terminal device other than the first terminal device and the second terminal device; and/or
wherein the signaling is transmitted to the first terminal device and/or the second terminal device through a direct communication interface; or
the signaling is transmitted to a transmitting end of the first terminal device and the second terminal device through a direct communication interface; or
the signaling is transmitted to the first terminal device and/or the second terminal device through a network device; or
the signaling is transmitted to a transmitting end of the first terminal device and the second terminal device through a network device.

11. A duplication transmission method for a sidelink, SL, performed by a network device and comprises:
transmitting configuration information to at least a first terminal device, wherein the configuration information is configured to configure a duplication transmission for the SL; the configuration information conforms to at least one case of:
the configuration information being targeted at a transmitting resource pool used by the first terminal device and/or a second terminal device, wherein the configuration information corresponding to the transmitting resource pool is dedicated for the first terminal device and the second terminal device, the transmitting resource pool comprises resource information available to transmit data in the SL transmission process, and the resource information comprises a frequency resource and a time slot resource;
the configuration information being targeted at a receiving resource pool used by the first terminal device and/or the second terminal device, wherein the configuration information corresponding to the receiving resource pool is dedicated for the first terminal device and the second terminal device, the receiving resource pool comprises resource information available to receive data in the SL transmission process, and the resource information comprises a frequency resource and a time slot resource.

12. The method according to claim 11, further comprising at least one of:
transmitting first indication information to the at least one terminal device, wherein the first indication information is configured to indicate whether the at least one terminal device is allowed to determine configuration parameters of the duplication transmission for the SL by itself;
transmitting second indicating information to the at least one terminal device, wherein the second indication information is configured to indicate whether the terminal device is allowed to determine to activate or de-activate the duplication transmission for the SL by itself; and
transmitting third indicating information to the at least one terminal device, wherein the third indicating information is configured to indicate whether the terminal device is allowed to determine whether to activate or de-activate a RLC entity of the duplication transmission for the SL by itself.

13. The method according to any one of claims 11 to 12, further comprising:
receiving assistance information transmitted by the at least one terminal device;
performing at least one of determining a configured duplication transmission of the SL, determining an activated and/or de-activated duplication transmission of the SL, and determining an activated and/or de-activated RLC entity.

14. A duplication transmission apparatus (500) for a sidelink ,SL, **characterized in that** the apparatus is configured to perform a method as claimed in any one of claims 1-10.

15. A duplication transmission apparatus (600) for a sidelink ,SL, **characterized in that** the apparatus is configured to perform a method as claimed in any one of claims 11-13.

## Patentansprüche

1. Duplizierungsübertragungsverfahren für eine Sidelink, SL, durchgeführt durch eine erste Endgerätvorrichtung und umfassend:
Erfassen (410) von Konfigurationsinformationen, wobei die Konfigurationsinformationen konfiguriert sind, eine Duplizierungsübertragung für die SL zu konfigurieren; und
Durchführen (420) eines SL-Übertragungsprozesses mit einer zweiten Endgerätvorrichtung basierend auf den Konfigurationsinformationen;
wobei die Konfigurationsinformationen mindestens einem der folgenden Fälle entsprechen:
die Konfigurationsinformationen sind auf einen Pool von Übertragungsbetriebsmitteln, die von der ersten Endgerätvorrichtung und/oder der zweiten Endgerätvorrichtung verwendet werden, gerichtet, wobei die Konfigurationsinformationen korrespondierend mit dem Pool von Übertragungsbetriebsmitteln für die erste Endgerätvorrichtung und die zweite Endgerätvorrichtung vorgesehen sind, der Pool von Übertragungsbetriebsmitteln Betriebsmittelinformationen umfasst, die verfügbar sind, um Daten in dem SL-Übertragungsprozess zu übertragen, und die Betriebsmittelinformationen ein Frequenz-Betriebsmittel und ein Zeitschlitz-Betriebsmittel umfassen;
die Konfigurationsinformationen sind auf einen Pool von Empfangsbetriebsmitteln, die von der ersten Endgerätvorrichtung und/oder der zweiten Endgerätvorrichtung verwendet werden, gerichtet, wobei die Konfigurationsinformationen korrespondierend mit dem Pool von Empfangsbetriebsmitteln für die erste Endgerätvorrichtung und die zweite Endgerätvorrichtung vorgesehen sind, der Pool von Empfangsbetriebsmitteln Betriebsmittelinformationen umfasst, die verfügbar sind, um Daten in dem SL-Übertragungsprozess zu empfangen, und die Betriebsmittelinformationen ein Frequenz-Betriebsmittel und ein Zeitschlitz-Betriebsmittel umfassen.

2. Verfahren nach Anspruch 1, wobei die Konfigurationsinformationen ferner mindestens einem der folgenden Fälle entsprechen:
die Konfigurationsinformationen sind auf die erste Endgerätvorrichtung und/oder die zweite Endgerätvorrichtung gerichtet; und
die Konfigurationsinformationen sind auf einen Datenfunkträger, DRB, und/oder einen Signalisierungsfunkträger, SRB, gerichtet.

3. Verfahren nach Anspruch 1 oder 2, wobei die Konfigurationsinformationen mindestens eines von Konfigurationsinformationen korrespondierend mit einer Duplizierungsübertragung, die 2 Funkverbindungssteuerung- bzw. RLC-Entitäten einsetzt, und Konfigurationsinformationen korrespondierend mit einer Duplizierungsübertragung, die mehr als 2 RLC-Entitäten einsetzt, umfassen; oder
wobei die Konfigurationsinformationen mindestens eines von mindestens einer RLC-Entitätsidentität oder Logikkanal- bzw. LCH-Identität korrespondierend mit einem Funkträger, RB, Primärpfadinformationen, Angabeinformationen, ob die Duplizierungsübertragung aktiviert ist, Sekundärpfadinformationen, einer aktivierten RLC-Entitätsidentität, einer aktivierten RLC-Entität-Gruppenidentität und einem zulässigen Träger umfassen; oder
wobei die Konfigurationsinformationen mindestens eine einer Identität der ersten Endgerätvorrichtung und/oder der zweiten Endgerätvorrichtung und einer RB-Identität umfassen; oder
wobei die Konfigurationsinformationen mindestens eine einer Aktivierungsidentität einer geteilten Übertragung und eines Schwellenwerts der geteilten Übertragung umfassen.

4. Verfahren nach einem der Ansprüche 1 bis 3, wobei das Durchführen (420) eines SL-Übertragungsprozesses mit einer zweiten Endgerätvorrichtung basierend auf den Konfigurationsinformationen umfasst:
Bestimmen, ob die Duplizierungsübertragung für die SL basierend auf den Konfigurationsinformationen durchgeführt werden soll;
Bestimmen, ob eine Duplizierungsübertragung für einen DRB und/oder einen SRB basierend auf den Konfigurationsinformationen durchgeführt werden soll;
Bestimmen mindestens eines des DRB, für den die Duplizierungsübertragung durchgeführt wird, des SRB, für den die Duplizierungsübertragung durchgeführt wird, einer RLC-Entität zum Durchführen der Duplizierungsübertragung, einer aktivierten RLC-Entität, einer RLC-Entitätsgruppe zum Durchführen der Duplizierungsübertragung, einer aktivierten RLC-Entitätsgruppe und der Anzahl von Duplikaten, für die die Duplizierungsübertragung durchgeführt wird, basierend auf den Konfigurationsinformationen; und
Bestimmen von RLC-Entitäten, an die Daten bzw. ein Datenduplikat in der Duplizierungsübertragung übertragen werden, basierend auf den Konfigurationsinformationen.

5. Verfahren nach einem der Ansprüche 1 bis 4, ferner umfassend:
Bestimmen, ob eine geteilte Übertragung für die SL in einem Fall, dass bestimmt wird, die Duplizierungsübertragung für die SL nicht durchzuführen, oder die Duplizierungsübertragung für die SL deaktiviert oder nicht konfiguriert ist, durchgeführt werden soll; und
Durchführen einer geteilten Datenübertragung durch einen Primärpfad und einen Sekundärpfad in einem Fall, dass bestimmt wird, die geteilte Übertragung für die SL durchzuführen; und/oder
wobei das Verfahren ferner umfasst:
Durchführen einer einzelnen RLC-Entitätsübertragung in einem Fall, dass bestimmt wird, die Duplizierungsübertragung für die SL nicht durchzuführen, oder die Duplizierungsübertragung für die SL deaktiviert oder nicht konfiguriert ist.

6. Verfahren nach einem der Ansprüche 1 bis 5, wobei die Konfigurationsinformationen durch die Netzwerkvorrichtung konfiguriert oder vorkonfiguriert werden;
wobei die Netzwerkvorrichtung konfiguriert ist, die Konfigurationsinformationen an die erste Endgerätvorrichtung bzw. die zweite Endgerätvorrichtung, zu übertragen; oder
die Netzwerkvorrichtung konfiguriert ist, die Konfigurationsinformationen an die erste Endgerätvorrichtung zu übertragen, und die erste Endgerätvorrichtung konfiguriert ist, die Konfigurationsinformationen an die zweite Endgerätvorrichtung zu übertragen; oder
die Netzwerkvorrichtung konfiguriert ist, die Konfigurationsinformationen an die erste Endgerätvorrichtung zu übertragen, und die erste Endgerätvorrichtung konfiguriert ist, die Konfigurationsinformationen nicht an die zweite Endgerätvorrichtung zu übertragen; oder die Netzwerkvorrichtung konfiguriert ist, die Konfigurationsinformationen an die zweite Endgerätvorrichtung zu übertragen, und die zweite Endgerätvorrichtung konfiguriert ist, die Konfigurationsinformationen nicht an die erste Endgerätvorrichtung zu übertragen; oder
die Netzwerkvorrichtung konfiguriert ist, die Konfigurationsinformationen an ein Übertragungsende der ersten Endgerätvorrichtung und der zweiten Endgerätvorrichtung zu übertragen.

7. Verfahren nach einem der Ansprüche 1 bis 5, wobei die Konfigurationsinformationen durch eine Ziel-Endgerätvorrichtung konfiguriert werden und die Ziel-Endgerätvorrichtung eine der ersten Endgerätvorrichtung, der zweiten Endgerätvorrichtung und einer dritten Endgerätvorrichtung außer der ersten Endgerätvorrichtung und der zweiten Endgerätvorrichtung ist; und/oder
wobei die Konfigurationsinformationen an die erste Endgerätvorrichtung und/oder die zweite Endgerätvorrichtung durch eine Direktkommunikationsschnittstelle übertragen werden; oder
die Konfigurationsinformationen an ein Übertragungsende der ersten Endgerätvorrichtung und der zweiten Endgerätvorrichtung durch eine Direktkommunikationsschnittstelle übertragen werden; oder
die Konfigurationsinformationen an die erste Endgerätvorrichtung und/oder die zweite Endgerätvorrichtung durch eine Netzwerkvorrichtung übertragen werden; oder
die Konfigurationsinformationen an ein Übertragungsende der ersten Endgerätvorrichtung und der zweiten Endgerätvorrichtung durch eine Netzwerkvorrichtung übertragen werden; und/oder
wobei die Konfigurationsinformationen sämtliche Konfigurationsparameter, die erforderlich sind, den SL-Übertragungsprozess durchzuführen, umfassen; oder
die Konfigurationsinformationen einen Teil der Konfigurationsparameter, die erforderlich sind, den SL-Übertragungsprozess durchzuführen, umfassen und die erste Endgerätvorrichtung einen verbleibenden Teil der Konfigurationsparameter, die erforderlich sind, den SL-Übertragungsprozess durchzuführen, selbst bestimmt.

8. Verfahren nach einem der Ansprüche 1 bis 7, ferner mindestens eines von Folgendem umfassend:
Erfassen einer ersten Aktivierungssignalisierung, wobei die erste Aktivierungssignalisierung konfiguriert ist, anzugeben, die Duplizierungsübertragung für die SL zu aktivieren;
Erfassen einer ersten Deaktivierungssignalisierung, wobei die erste Deaktivierungssignalisierung konfiguriert ist, anzugeben, die Duplizierungsübertragung für die SL zu deaktivieren;
Erfassen einer zweiten Aktivierungssignalisierung, wobei die zweite Aktivierungssignalisierung konfiguriert ist, eine RLC-Entität anzugeben, die zum Aktivieren der Duplizierungsübertragung für die SL verwendet wird;
Erfassen einer zweiten Deaktivierungssignalisierung, wobei die zweite Deaktivierungssignalisierung konfiguriert ist, eine RLC-Entität anzugeben, die zum Deaktivieren der Duplizierungsübertragung für die SL verwendet wird; und
Erfassen einer dritten Aktivierungssignalisierung, wobei die dritte Aktivierungssignalisierung konfiguriert ist, eine RLC-Entität anzugeben, die zum Aktivieren oder Einsetzen einer geteilten Übertragung verwendet wird, oder anzugeben, die geteilte Übertragung zu aktivieren oder einzusetzen.

9. Verfahren nach Anspruch 8, wobei Signalisierung durch eine Netzwerkvorrichtung konfiguriert oder vorkonfiguriert wird und die Signalisierung mindestens eine der ersten Aktivierungssignalisierung, der ersten Deaktivierungssignalisierung, der zweiten Aktivierungssignalisierung, der zweiten Deaktivierungssignalisierung und der dritten Aktivierungssignalisierung umfasst; und/oder
wobei die Netzwerkvorrichtung konfiguriert ist, die Signalisierung an die erste Endgerätvorrichtung bzw. die zweite Endgerätvorrichtung zu übertragen; oder
die Netzwerkvorrichtung konfiguriert ist, die Signalisierung an die erste Endgerätvorrichtung zu übertragen, und die erste Endgerätvorrichtung konfiguriert ist, die Signalisierung an die zweite Endgerätvorrichtung zu übertragen; oder die Netzwerkvorrichtung konfiguriert ist, die Signalisierung an die zweite Endgerätvorrichtung zu übertragen, und die zweite Endgerätvorrichtung konfiguriert ist, die Signalisierung an die erste Endgerätvorrichtung zu übertragen; oder
die Netzwerkvorrichtung konfiguriert ist, die Signalisierung an die erste Endgerätvorrichtung zu übertragen, und die erste Endgerätvorrichtung konfiguriert ist, die Signalisierung nicht an die zweite Endgerätvorrichtung zu übertragen; oder die Netzwerkvorrichtung konfiguriert ist, die Signalisierung an die zweite Endgerätvorrichtung zu übertragen, und die zweite Endgerätvorrichtung konfiguriert ist, die Signalisierung nicht an die erste Endgerätvorrichtung zu übertragen; oder
die Netzwerkvorrichtung konfiguriert ist, die Signalisierung an ein Übertragungsende der ersten Endgerätvorrichtung und der zweiten Endgerätvorrichtung zu übertragen.

10. Verfahren nach Anspruch 8, wobei Signalisierung durch eine Ziel-Endgerätvorrichtung konfiguriert wird, die Signalisierung mindestens eine der ersten Aktivierungssignalisierung, der ersten Deaktivierungssignalisierung, der zweiten Aktivierungssignalisierung, der zweiten Deaktivierungssignalisierung und der dritten Aktivierungssignalisierung umfasst und die Ziel-Endgerätvorrichtung eine der ersten Endgerätvorrichtung, der zweiten Endgerätvorrichtung und einer dritten Endgerätvorrichtung außer der ersten Endgerätvorrichtung und der zweiten Endgerätvorrichtung ist; und/oder
wobei die Signalisierung an die erste Endgerätvorrichtung und/oder die zweite Endgerätvorrichtung durch eine Direktkommunikationsschnittstelle übertragen wird; oder die Signalisierung an ein Übertragungsende der ersten Endgerätvorrichtung und der zweiten Endgerätvorrichtung durch eine Direktkommunikationsschnittstelle übertragen wird; oder
die Signalisierung an die erste Endgerätvorrichtung und/oder die zweite Endgerätvorrichtung durch eine Netzwerkvorrichtung übertragen wird; oder
die Signalisierung an ein Übertragungsende der ersten Endgerätvorrichtung und der zweiten Endgerätvorrichtung durch eine Netzwerkvorrichtung übertragen wird.

11. Duplizierungsübertragungsverfahren für eine Sidelink, SL, durchgeführt durch eine Netzwerkvorrichtung und umfassend:
Übertragen von Konfigurationsinformationen an mindestens eine erste Endgerätvorrichtung, wobei die Konfigurationsinformationen konfiguriert sind, eine Duplizierungsübertragung für die SL zu konfigurieren;
wobei die Konfigurationsinformationen mindestens einem der folgenden Fälle entsprechen:
die Konfigurationsinformationen sind auf einen Pool von Übertragungsbetriebsmitteln, die von der ersten Endgerätvorrichtung und/oder einer zweiten Endgerätvorrichtung verwendet werden, gerichtet, wobei die Konfigurationsinformationen korrespondierend mit dem Pool von Übertragungsbetriebsmitteln für die erste Endgerätvorrichtung und die zweite Endgerätvorrichtung vorgesehen sind, der Pool von Übertragungsbetriebsmitteln Betriebsmittelinformationen umfasst, die verfügbar sind, um Daten in dem SL-Übertragungsprozess zu übertragen, und die Betriebsmittelinformationen ein Frequenz-Betriebsmittel und ein Zeitschlitz-Betriebsmittel umfassen;
die Konfigurationsinformationen sind auf einen Pool von Empfangsbetriebsmitteln, die von der ersten Endgerätvorrichtung und/oder der zweiten Endgerätvorrichtung verwendet werden, gerichtet, wobei die Konfigurationsinformationen korrespondierend mit dem Pool von Empfangsbetriebsmitteln für die erste Endgerätvorrichtung und die zweite Endgerätvorrichtung vorgesehen sind, der Pool von Empfangsbetriebsmitteln Betriebsmittelinformationen umfasst, die verfügbar sind, um Daten in dem SL-Übertragungsprozess zu empfangen, und die Betriebsmittelinformationen ein Frequenz-Betriebsmittel und ein Zeitschlitz-Betriebsmittel umfassen.

12. Verfahren nach Anspruch 11, ferner mindestens eines von Folgendem umfassend:
Übertragen von ersten Angabeinformationen an die mindestens eine Endgerätvorrichtung, wobei die ersten Angabeinformationen konfiguriert sind, anzugeben, ob der mindestens einen Endgerätvorrichtung gestattet ist, Konfigurationsparameter der Duplizierungsübertragung für die SL selbst zu bestimmen;
Übertragen von zweiten Angabeinformationen an die mindestens eine Endgerätvorrichtung, wobei die zweiten Angabeinformationen konfiguriert sind, anzugeben, ob der Endgerätvorrichtung gestattet ist, das Aktivieren oder Deaktivieren der Duplizierungsübertragung für die SL selbst zu bestimmen; und
Übertragen von dritten Angabeinformationen an die mindestens eine Endgerätvorrichtung, wobei die dritten Angabeinformationen konfiguriert sind, anzugeben, ob der Endgerätvorrichtung gestattet ist, zu bestimmen, eine RLC-Entität der Duplizierungsübertragung für die SL selbst zu aktivieren oder zu deaktivieren.

13. Verfahren nach einem der Ansprüche 11 bis 12, ferner umfassend:
Empfangen von durch die mindestens eine Endgerätvorrichtung übertragenen Unterstützungsinformationen;
Durchführen mindestens eines von Bestimmen einer konfigurierten Duplizierungsübertragung der SL, Bestimmen einer aktivierten und/oder deaktivierten Duplizierungsübertragung der SL und Bestimmen einer aktivierten und/oder deaktivierten RLC-Entität.

14. Duplizierungsübertragungsgerät (500) für eine Sidelink, SL, **dadurch gekennzeichnet, dass** das Gerät konfiguriert ist, ein Verfahren nach einem der Ansprüche 1-10 durchzuführen.

15. Duplizierungsübertragungsgerät (600) für eine Sidelink, SL, **dadurch gekennzeichnet, dass** das Gerät konfiguriert ist, ein Verfahren nach einem der Ansprüche 11-13 durchzuführen.

## Revendications

1. Procédé de transmission de duplication pour une liaison latérale, SL, réalisé par un premier dispositif terminal et comprenant :
l'acquisition (410) d'informations de configuration, les informations de configuration étant configurées pour configurer une transmission de duplication pour la SL ; et
la réalisation (420) d'un processus de transmission SL avec un deuxième dispositif terminal sur la base des informations de configuration ;
les informations de configuration étant conformes à au moins un cas parmi :
les informations de configuration étant ciblées sur un pool de ressources d'émission utilisé par le premier dispositif terminal et/ou le deuxième dispositif terminal, les informations de configuration correspondant au pool de ressources d'émission étant dédiées au premier dispositif terminal et au deuxième dispositif terminal ;
le pool de ressources d'émission comprenant des informations de ressource disponibles pour transmettre des données dans le processus de transmission SL, et les informations de ressource comprenant une ressource de fréquence et une ressource de créneau temporel ;
les informations de configuration étant ciblées sur un pool de ressources de réception utilisé par le premier dispositif terminal et/ou le deuxième dispositif terminal, les informations de configuration correspondant au pool de ressources de réception étant dédiées au premier dispositif terminal et au deuxième dispositif terminal, le pool de ressources de réception comprenant des informations de ressource disponibles pour recevoir des données dans le processus de transmission SL, et les informations de ressource comprenant une ressource de fréquence et une ressource de créneau temporel.

2. Procédé selon la revendication 1, les informations de configuration étant en outre conformes à au moins un cas parmi :
les informations de configuration étant ciblées sur le premier dispositif terminal et/ou le deuxième dispositif terminal ; et
les informations de configuration étant ciblées sur un support radio de données, DRB, et/ou un support radio de signalisation, SRB.

3. Procédé selon la revendication 1 ou 2, les informations de configuration comprenant au moins certaines parmi des informations de configuration correspondant à une transmission de duplication employant 2 entités de commande de liaison radio, RLC, et des informations de configuration correspondant à une transmission de duplication employant plus de 2 entités RLC ; ou
les informations de configuration comprenant au moins une identité parmi au moins une identité d'entité RLC ou une identité de canal logique « LCH » correspondant à un support radio, RB, des informations de chemin primaire, des informations d'indication indiquant si la transmission de duplication est activée, des informations de chemin secondaire, une identité d'entité RLC activée, une identité de groupe d'entités RLC activé, et une porteuse autorisée ; ou
les informations de configuration comprenant au moins une identité parmi une identité du premier dispositif terminal et/ou du deuxième dispositif terminal et une identité RB ; ou
les informations de configuration comprenant au moins un élément parmi une identité d'activation d'une transmission divisée et un seuil de la transmission divisée.

4. Procédé selon l'une quelconque des revendications 1 à 3, la réalisation (420) d'un processus de transmission SL avec un deuxième dispositif terminal sur la base des informations de configuration, comprenant :
la détermination d'effectuer ou non la transmission de duplication pour la SL sur la base des informations de configuration ;
la détermination d'effectuer ou non une transmission de duplication pour un DRB et/ou un SRB sur la base des informations de configuration ;
la détermination d'au moins l'un parmi le DRB pour lequel la transmission de duplication est effectuée, le SRB pour lequel la transmission de duplication est effectuée, une entité RLC effectuant la transmission de duplication, une entité RLC activée ; un groupe d'entités RLC effectuant la transmission de duplication ; un groupe d'entités RLC activé, et le nombre de duplicatas pour lesquels la transmission de duplication est effectuée, sur la base des informations de configuration ; et
la détermination d'entités RLC auxquelles des données et un duplicata de données dans la transmission de duplication sont transmis, respectivement, sur la base des informations de configuration.

5. Procédé selon l'une quelconque des revendications 1 à 4, comprenant en outre :
la détermination d'effectuer ou non une transmission divisée pour la SL dans un cas de détermination de ne pas effectuer la transmission de duplication pour la SL ou la transmission de duplication pour la SL étant désactivée ou non configurée ; et
la réalisation d'une transmission de données divisée par l'intermédiaire d'un chemin primaire et d'un chemin secondaire dans un cas de détermination d'effectuer la transmission divisée pour la SL ; et/ou
le procédé comprenant en outre :
la réalisation d'une transmission à entité RLC unique dans un cas de détermination de ne pas effectuer la transmission de duplication pour la SL ou la transmission de duplication pour la SL étant désactivée ou non configurée.

6. Procédé selon l'une quelconque des revendications 1 à 5, les informations de configuration étant configurées ou pré-configurées par le dispositif de réseau ;
le dispositif de réseau étant configuré pour transmettre les informations de configuration au premier dispositif terminal et au deuxième dispositif terminal, respectivement ; ou
le dispositif de réseau étant configuré pour transmettre les informations de configuration au premier dispositif terminal, et le premier dispositif terminal étant configuré pour transmettre les informations de configuration au deuxième dispositif terminal ; ou
le dispositif de réseau étant configuré pour transmettre les informations de configuration au premier dispositif terminal et le premier dispositif terminal étant configuré pour ne pas transmettre les informations de configuration au deuxième dispositif terminal ; ou le dispositif de réseau étant configuré pour transmettre les informations de configuration au deuxième dispositif terminal et le deuxième dispositif terminal étant configuré pour ne pas transmettre les informations de configuration au premier dispositif terminal ; ou
le dispositif de réseau étant configuré pour transmettre les informations de configuration à une extrémité d'émission du premier dispositif terminal et du deuxième dispositif terminal.

7. Procédé selon l'une quelconque des revendications 1 à 5 ; les informations de configuration étant configurées par un dispositif terminal cible, et le dispositif terminal cible étant l'un parmi le premier dispositif terminal, le deuxième dispositif terminal, et un troisième dispositif terminal autre que le premier dispositif terminal et le deuxième dispositif terminal ; et/ou
les informations de configuration étant transmises au premier dispositif terminal et/ou au deuxième dispositif terminal par l'intermédiaire d'une interface de communication directe ; ou
les informations de configuration étant transmises à une extrémité d'émission du premier dispositif terminal et du deuxième dispositif terminal par l'intermédiaire d'une interface de communication directe ; ou
les informations de configuration étant transmises au premier dispositif terminal et/ou au deuxième dispositif terminal par l'intermédiaire d'un dispositif de réseau ; ou
les informations de configuration étant transmises à une extrémité d'émission du premier dispositif terminal et du deuxième dispositif terminal par l'intermédiaire d'un dispositif de réseau ; et/ou
les informations de configuration comprenant tous les paramètres de configuration requis pour réaliser le processus de transmission SL ; ou
les informations de configuration comprenant une partie des paramètres de configuration requis pour réaliser le processus de transmission SL, et le premier dispositif terminal déterminant une partie restante des paramètres de configuration requis pour réaliser le processus de transmission SL par lui-même.

8. Procédé selon l'une quelconque des revendications 1 à 7, comprenant en outre au moins l'un parmi :
l'acquisition d'une première signalisation d'activation, la première signalisation d'activation étant configurée pour indiquer d'activer la transmission de duplication pour la SL ;
l'acquisition d'une première signalisation de désactivation, la première signalisation de désactivation étant configurée pour indiquer de désactiver la transmission de duplication pour la SL ;
l'acquisition d'une deuxième signalisation d'activation, la deuxième signalisation d'activation étant configurée pour indiquer une entité RLC utilisée pour activer la transmission de duplication pour la SL ;
l'acquisition d'une deuxième signalisation de désactivation, la deuxième signalisation de désactivation étant configurée pour indiquer une entité RLC utilisée pour désactiver la transmission de duplication pour la SL ; et
l'acquisition d'une troisième signalisation d'activation, la troisième signalisation d'activation étant configurée pour indiquer une entité RLC utilisée pour activer ou employer une transmission divisée, ou indiquer d'activer ou d'employer la transmission divisée.

9. Procédé selon la revendication 8, une signalisation étant configurée ou pré-configurée par un dispositif de réseau, et la signalisation comprenant au moins l'un parmi la première signalisation d'activation, la première signalisation de désactivation, la deuxième signalisation d'activation, la deuxième signalisation de désactivation, et la troisième signalisation d'activation ; et/ou
le dispositif de réseau étant configuré pour transmettre la signalisation au premier dispositif terminal et au deuxième dispositif terminal, respectivement ; ou
le dispositif de réseau étant configuré pour transmettre la signalisation au premier dispositif terminal et le premier dispositif terminal étant configuré pour transmettre la signalisation au deuxième dispositif terminal ; ou le dispositif de réseau étant configuré pour transmettre la signalisation au deuxième dispositif terminal et le deuxième dispositif terminal étant configuré pour transmettre la signalisation au premier dispositif terminal ; ou
le dispositif de réseau étant configuré pour transmettre la signalisation au premier dispositif terminal et le premier dispositif terminal étant configuré pour ne pas transmettre la signalisation au deuxième dispositif terminal ; ou le dispositif de réseau étant configuré pour transmettre la signalisation au deuxième dispositif terminal et le deuxième dispositif terminal étant configuré pour ne pas transmettre la signalisation au premier dispositif terminal ; ou
le dispositif de réseau étant configuré pour transmettre la signalisation à une extrémité d'émission du premier dispositif terminal et du deuxième dispositif terminal.

10. Procédé selon la revendication 8, une signalisation étant configurée par un dispositif terminal cible, la signalisation comprenant au moins l'un parmi la première signalisation d'activation, la première signalisation de désactivation, la deuxième signalisation d'activation, la deuxième signalisation de désactivation, et la troisième signalisation d'activation, et le dispositif terminal cible étant l'un parmi le premier dispositif terminal, le deuxième dispositif terminal, et un troisième dispositif terminal autre que le premier dispositif terminal et le deuxième dispositif terminal ; et/ou
la signalisation étant transmise au premier dispositif terminal et/ou au deuxième dispositif terminal par l'intermédiaire d'une interface de communication directe ; ou
la signalisation étant transmise à une extrémité d'émission du premier dispositif terminal et du deuxième dispositif terminal par l'intermédiaire d'une interface de communication directe ; ou
la signalisation étant transmise au premier dispositif terminal et/ou au deuxième dispositif terminal par l'intermédiaire d'un dispositif de réseau ; ou
la signalisation étant transmise à une extrémité d'émission du premier dispositif terminal et du deuxième dispositif terminal par l'intermédiaire d'un dispositif de réseau.

11. Procédé de transmission de duplication pour une liaison latérale, SL, réalisé par un dispositif de réseau et comprenant :
la transmission d'informations de configuration à au moins un premier dispositif terminal, les informations de configuration étant configurées pour configurer une transmission de duplication pour la SL ; les informations de configuration étant conformes à au moins un cas parmi :
les informations de configuration étant ciblées sur un pool de ressources d'émission utilisé par le premier dispositif terminal et/ou un deuxième dispositif terminal, les informations de configuration correspondant au pool de ressources d'émission étant dédiées au premier dispositif terminal et au deuxième dispositif terminal, le pool de ressources d'émission comprenant des informations de ressource disponibles pour transmettre des données dans le processus de transmission SL, et les informations de ressource comprenant une ressource de fréquence et une ressource de créneau temporel ;
les informations de configuration étant ciblées sur un pool de ressources de réception utilisé par le premier dispositif terminal et/ou le deuxième dispositif terminal, les informations de configuration correspondant au pool de ressources de réception étant dédiées au premier dispositif terminal et au deuxième dispositif terminal, le pool de ressources de réception comprenant des informations de ressource disponibles pour recevoir des données dans le processus de transmission SL, et les informations de ressource comprenant une ressource de fréquence et une ressource de créneau temporel.

12. Procédé selon la revendication 11, comprenant en outre au moins l'un parmi :
la transmission de premières informations d'indication à l'au moins un dispositif terminal, les premières informations d'indication étant configurées pour indiquer si l'au moins un dispositif terminal est autorisé à déterminer des paramètres de configuration de la transmission de duplication pour la SL par lui-même ;
la transmission de deuxièmes informations d'indication à l'au moins un dispositif terminal, les deuxièmes informations d'indication étant configurées pour indiquer si le dispositif terminal est autorisé à déterminer d'activer ou de désactiver la transmission de duplication pour la SL par lui-même ; et
la transmission de troisièmes informations d'indication à l'au moins un dispositif terminal, les troisièmes informations d'indication étant configurées pour indiquer si le dispositif terminal est autorisé à déterminer d'activer ou de désactiver une entité RLC de la transmission de duplication pour la SL par lui-même.

13. Procédé selon l'une quelconque des revendications 11 à 12, comprenant en outre :
la réception d'informations d'assistance transmises par l'au moins un dispositif terminal ;
la réalisation d'au moins l'un parmi la détermination d'une transmission de duplication configurée de la SL, la détermination d'une transmission de duplication activée et/ou désactivée de la SL, et la détermination d'une entité RLC activée et/ou désactivée.

14. Appareil (500) de transmission de duplication pour une liaison latérale, SL, **caractérisé en ce que** l'appareil est configuré pour réaliser un procédé selon l'une quelconque des revendications 1 à 10.

15. Appareil (600) de transmission de duplication pour une liaison latérale, SL, **caractérisé en ce que** l'appareil est configuré pour réaliser un procédé selon l'une quelconque des revendications 11 à 13.
